(19) Europäisches Patentamt
European Patent Office
Office européen des brevets

(11) Veröffentlichungsnummer: **0 446 469 A1**

(12) **EUROPÄISCHE PATENTANMELDUNG**

(21) Anmeldenummer: **90124699.1**

(22) Anmeldetag: **19.12.90**

(51) Int. Cl.5: **C08L 33/20**, C08K 5/523, C08K 5/5313, C08K 5/5333, D01F 1/07, //(C08L33/20,61:32)

(30) Priorität: **21.02.90 DE 4005376**

(43) Veröffentlichungstag der Anmeldung: **18.09.91 Patentblatt 91/38**

(84) Benannte Vertragsstaaten: **DE FR GB IT**

(71) Anmelder: **BAYER AG**
**W-5090 Leverkusen 1 Bayerwerk(DE)**

(72) Erfinder: **Engelhard, Helmut, Dr.**
**Moltkestrasse 9**
**W-4047 Dormagen 1(DE)**
Erfinder: **Fuhr, Karl, Dr.**
**Kruellsdyk 55**
**W-4150 Krefeld(DE)**
Erfinder: **Spilgies, Günter, Dr.**
**Wachtelweg 2**
**W-4047 Dormagen 1(DE)**
Erfinder: **Müller, Friedemann, Dr.**
**Am Steinacker 5**
**W-4040 Neuss(DE)**
Erfinder: **Arndt, Uwe, Dr.**
**Malteser Strasse 85**
**W-5000 Köln 40(DE)**
Erfinder: **Kauth, Hermann, Dr.**
**Kolpingstrasse 34**
**W-4150 Krefeld 11(DE)**
Erfinder: **Fröhlen, Hans-Günter, Dr.**
**In Holzhausen 92**
**W-5090 Leverkusen 3(DE)**

(54) **Flammgeschützte, phosphorhaltige Phenolderivate enthaltende Polyacrylnitril-(Co)-polymerisate.**

(57) Die Erfindung betrifft flammgeschützte, vorzugsweise halogenfreie Mischungen aus Acrylnitril(co)-polymerisaten und P-haltigen Polyphenolderivaten, insbesondere P-haltigen Polyphenolestern auf Basis von Phenol-Aldehyd/Keton-Kondensaten (Novolaken), sowie (daraus hergestellte) Formkörper wie Filme, Fasern und Fäden enthaltend diese Mischungen. Besonders bevorzugt sind Mischungen, welche Acrylnitril(co)polymerisate mit ungesättigten Carbonsäuren als Comonomere enthalten, wobei insbesondere diese Säuren in Salze überführt sind. Als phosphorhaltige Phenolderivate werden 3 bis 25 Gew.-% an Phosphinsäureestern, Phosphonsäureestern oder Phosphorsäureestern von Polyphenolen eingesetzt.

In einer besonderen Ausführungsform werden Polyphenole oder Novolake zusätzlich zu den phosphorhaltigen Polyphenol-ester-Zusätzen mitverwendet.

Die Mischungen werden aus Lösungsmitteln, insbesondere Dimethylformamid oder Dimethylacetamid versponnen.



Rank Xerox (UK) Business Services

Die Erfindung betrifft flammgeschützte, vorzugsweise halogenfreie Mischungen aus Acrylnitril(co)-polymerisaten und P-haltigen Polyphenolderivaten, insbesondere P-haltigen Polyphenolestern auf Basis von Phenol-Aldehyd/Keton-Kondensaten (Novolaken), sowie (daraus hergestellte) Formkörper wie Filme, Fasern und Fäden enthaltend diese Mischungen. Besonders bevorzugt sind Mischungen, welche Acrylnitril(co)-polymerisate mit ungesättigten Carbonsäuren als Comonomere enthalten, wobei insbesondere diese Säuren in Salze überführt sind. Als phosphorhaltige Phenolderivate werden 3 bis 25 Gew.-% an Phosphinsäureestern, Phosphonsäureestern oder Phosphorsäureestern von Polyphenolen eingesetzt.

In einer besonderen Ausführungsform werden Polyphenole oder Novolake zusätzlich zu den phosphorhaltigen Polyphenol-ester-Zusätzen mitverwendet.

Die Mischungen werden aus Lösungsmitteln, insbesondere Dimethylformamid oder Dimethylacetamid versponnen.

Um Acrylnitrilpolymerisaten und ihren Formkörpern, wie Filamente, Fasern, Fäden oder Membranen einen gewissen Widerstand gegen Entflammbarkeit und Brennen zu verleihen, copolymerisiert man das Acrylnitril in der Regel mit halogenhaltigen Comonomeren, wie z.B. Vinylchlorid, Vinylbromid, Vinylidenchlorid u.a., oder man mischt Acrylnitrilcopolymerisate mit Halogen enthaltenden organischen oder anorganischen Polymeren, Oligomeren bzw. niedermolekularen Verbindungen. Als Synergisten für diese Halogenträger wirken anorganische Oxide, wie $Sb_2O_3$, $Sb_2O_5$, $Al_2O_3$, $SnO_4$ u.a., ferner P-Derivate, wie nieder- oder hochmolekulare Phosphite, Phosphate, Borate. Dem Fachmann sind derartige Fasern und Fäden sowie ihre Herstellungsweisen bekannt. Diese Produkte werden auch in großem Umfang kommerziell genutzt.

Die genannten organischen Halogenverbindungen, wie beispielsweise Vinylbromid, Vinylchlorid, Vinylidenchlorid sind von besonderer Umweltrelevanz, so daß bei ihrer Verwendung erhöhter Aufwand erforderlich ist, um die Belastungen von Prozeßabluft, -abwasser oder -lösungsmitteln mit diesen Stoffen so gering wie möglich zu halten.

Copolymerisiert man z.B. Acrylnitril, funktionelle Comonomere und die genannten Halogenverbindungen in wäßriger Suspension, so muß man darauf achten, möglichst wenig oder keine wasserlöslichen, halogenhaltigen Nebenprodukte entstehen zu lassen, da ihre biologische Elimination in einer Kläranlage nicht einfach ist. Man muß daher spezielle Verfahren der Reinigung, wie z.B.

Adsorption, anwenden. Dies gilt auch für die Weiterverarbeitung derart oder nach anderen Methoden erstellter Polymerisate oder Polymermischungen zu Fasern, die halogenhaltige Produkte zum Flammschutz aufweisen, wenn Wasser als Streckmedium benutzt wird.

Aus ökonomischen und ökologischen Gründen ist auch die Regenerierung der während der Polymerisation nicht ausgenutzten halogenhaltigen Monomeren neben der des Acrylnitrils intensiv zu gestalten, um die Prozeßmedien Abluft, Abwasser und Lösungsmittel von diesen Stoffen frei zu halten.

Der Flammschutzeffekt der beschriebenen Polymerzusammensetzungen beruht auf einer wärmeinduzierten Abspaltung von brandhemmendem Halogenwasserstoff. Es wird ferner in der Festphase des Polymers infolge einer Vernetzung und katalysierten Cyclisierung eine Carbonisierung induziert und damit der Aufbau eines abschirmenden Kohlenstoffgerüstes bewirkt. In der Gasphase wird zudem durch Bildung von den Brennmechanismus abbrechenden Radikalen das Weiterbrennen verringert bzw. verhindert. Das Auftreten von Halogenwasserstoff in den Brandgasen kann in Verbindung mit Feuchtigkeit aus Luft oder mit Wasser durch Bildung der entsprechenden Säure zu Sekundärschäden in der näheren oder auch weiteren Umgebung des Brandherdes führen.

Aufgrund der geschilderten Nachteile besteht der Wunsch, Acrylnitrilcopolymerisaten und daraus gebildeten Formkörpern eine gewisse Schwerentflammbarkeit und verringerte Brenneigung zu verleihen, die nicht an das Vorhandensein von Halogenen im polymeren Substrat gekoppelt ist.

Um dieses Ziel zu erreichen, sind bereits mehrere Wege beschritten worden. Einer besteht darin, Acrylnitril mit P-haltigen Monomeren und anderen halogenfreien Comonomeren zu (co)polymerisieren. Solche Phosphorverbindungen sind beispielsweise olefinisch ungesättigte tertiäre Phosphinoxide (DAS 12 41 995), vinylphenylphosphonige Säure (US 32 11 782), Allylphosphonsäureester (US 26 36 027), Dialkyl-2-cyan-propen-3-phosphonate (US 27 21 876), Vinylphosphonate (DAS 11 30 177, 11 25 658), Acrylamido-2-methylpropanphosphonsäure (DE 32 10 775), Dialkyl-($\alpha$-alkoxy)vinylphosphonate (GE 22 22 489), Diethylphosphonobutadien (RA 278 954), Phosphonoalkyl(meth)acrylate (Textilpraxis international, 1979, Sept., S. 1100-1113).

Die Verwendung solcher Comonomeren bei der Polymerisation wirft verschiedene Probleme auf. Häufig ist die Copolymerisierbarkeit mit Acrylnitril nur mäßig. Man kann bei ungünstigen Copolymerisationsparametern zwischen den P-Monomeren und Acrylnitril zur Erzielung eines vertretbaren Einbaus an P ins Copolymer mit gegenüber der Einbaurate hohem Überschuß an diesen Monomeren in der Vorlage fahren, jedoch verbleibt dann ein Großteil der Verbindungen im Reaktionsgemisch aus Polymer und Fällungs-, Suspensions-, Lösungsmittel. Da die Siedepunkte dieser P-haltigen Monomeren im Vergleich zu Acrylnitril

häufig sehr hoch sind, ist ihre Rückgewinnung unter normalen Bedingungen der Acrylnitrildestillation nicht möglich, und man muß daher hohe Temperaturen, starkes Vakuum oder vollkommen andere Methoden der Regenerierung, wie z.B. Extraktion, Adsorption, Fällung o.ä. wählen, der technische Aufwand ist bedeutend. Es ist nicht auszuschließen, daß durch stärkere Temperaturbelastungen des Gemisches aus Polymer, Comonomeren und Reaktionsmedium das Polymer selbst hinsichtlich Farbe und anderer Eigenschaften geschädigt wird. Auch wenn die Copolymerisierbarkeit solcher P-enthaltenden Monomeren gut ist, besteht die Problematik der Rückgewinnung, denn auch geringe Mngen, die z.B. noch wegen des nicht 100 %igen Umsatzes der Polymerisation vorhanden sind, müssen vor der Weiterverarbeitung der Copolymerisate zu Fasern, Filmen oder anderen Formkörpern entfernt werden, um nicht später im Zuge dieser Polymerverformung ökologisch störend aufzutreten.

Ein anderer Weg, um über Phosphorverbindungen eine Schwerbrennbarkeit von Polyacrylnitril zu erreichen, ist das Zumischen von bestimmten P-haltigen Komponenten, seien es nieder- oder höhermolekulare Stoffe. Genannt werden Phosphinoxide (EP-A 10 28 158), P-haltige Kondensationsprodukte von Aminen (US-PS 33 32 889), Additionsprodukte aus Estern und/oder Amiden von Säuren des Phosphors und Isocyanaten (DE-A 16 18 408), P-haltige Melaminderivate (DE-A 20 42 661), Phosphorsäureester (US-PS 29 49 432), 1,2-Oxiphospholane (DE-A 24 41 998), Kondensationsprodukte aus Harnstoff und Phosphorsäureestern (US-A 35 83 938), Polyphosphorsäureamide (JA 7208773-R), Polyalkylenphenylphosphonate (FR-PS 034 820), andere Polyphosphonate (JA 7039057-R) u.a. Eine der wichtigsten Voraussetzungen für die langfristige Wirksamkeit solcher Substanzen ist ihre Wasserun(schwer)löslichkeit, damit sie nicht bereits auf dem Wege der Herstellung der (Mod)Acrylfasern und Fäden oder anderer Formkörper bzw. bei späteren Färbe- und Reinigungsprozessen verloren gehen. Daher weisen diese Produkte häufig langkettige, aliphatische oder aromatische Substituenten, welche eine Hydrophobie bewirken, auf. Gleichzeitig wird dadurch aber der P-Gehalt des Stoffes reduziert, so daß man seine Menge im Gemisch mit dem Polyacrylnitril relativ hoch bemessen muß, um einen für eine flammhemmende Wirkung ausreichenden P-Anteil zu erhalten.

Grundsätzlich ist bekannt, daß man, um über P-Derivate allein eine deutliche Verminderung der Brennbarkeit von (Mod)Acrylfasern, entsprechend einem LOI-Wert von ca. 27 zu erreichen, einen P-Gehalt im Substrat von ca. 3 Gew.-% einstellen muß (vgl. Textilpraxis international 1979, September, S. 1103). Dies bedeutet bei Copolymerisation oder Zusätzen hohe incorporierte Comonomeranteile bzw. Zusatzmengen, wodurch besonders im 2. Fall die textiltechnologischen Werte abfallen können.

Eine andere Methode, die ohne die Verwendung von Halogen- und/oder P-Verbindungen zu einer Schwerbrennbarkeit von Acrylnitrilpolymerisaten oder daraus hergestellten Formmassen führt, ist die Behandlung von Acrylnitrilcopolymerisaten oder daraus hergestellten Formmassen mit Hydroxylamin (DE 26 58 907), Hydroxylamin + organische Base (DE 27 12 508, 27 22 983), anschließende Säurennachbehandlung und dann Komplexierung mit Metallsalzlösungen. Dies kann sowohl mit den Polymeren in Lösung oder mit Fasern, Fäden, Textilartikeln durchgeführt werden. Anstelle des Hydroxylamins ist auch Hydrazin ein setzbar (DE 27 19 461).

Nachteilig bei diesen Behandlungsverfahren sind die langen Reaktionszeiten des Substrates mit den aktiven Verbindungen Hydroxylamin oder Hydrazin. Bis zu mehrere Stunden werden dabei benötigt, vereinzelt muß sogar unter Druck gearbeitet werden.

In der DE-A 24 22 642 sind flamhemmende Formkörper, u.a. auf Acrylnitrilpolymerbasis beschrieben, die mindestens 40 Mol-% COOH-Gruppen enthalten, die teilweise in die Salzform überführt worden sind. Man erhält solche Produkte nach der Beschreibung durch mehrstufige Behandlung von Polyacrylnitrilfasern mit Hydrazin/Säure/Salzlösung.

Will man die Umsetzung mit Hydrazin vermeiden und durch Copolymerisation von Acrylnitril mit Carbonsöurefunktionen tragenden Monomeren, wie z.B. (Meth)acrylsäure oder Itaconsäure, derartige Produkte als Einsatzstoffe herstellen, so sind bei der vorgegebenen Säuremenge die Acrylnitrilgehalte der Polymerisate <60 Gew.-%, bezogen auf Polymer.

In Textilpraxis International, 1979, September-Ausgabe, S. 1104, wird dargelegt, daß man durch Copolymerisation von Acrylnitril mit Acrylsäure und anschließende Überführung in das Zinksalz Polymerisate erhalten kann, die ein vermindertes Brennverhalten aufweisen. Untersucht wird ein Copolymerisat aus 9 Mol Acrylnitril und 1 Mol Zinkacrylat. Das entspricht einem Ausgangs-Copolymerisat mit 77 Gew.-% Acrylnitril und 23 Gew.-% Acrylsäure. Es werden keine Angaben darüber gemacht, wie das Brennverhalten daraus hergestellter Fasern oder Fäden und die textiltechnologischen Daten ausgefallen sind.

Es hat sich gezeigt, daß bei der Herstellung solcher Polymerisate aus Acrylnitril und Carboxyleinheiten enthaltenden Monomeren vermehrt wasserlösliche Produkte entstehen, je höher der Anteil der Säure im Acrylnitrilcopolymerisat sein soll. Daher sollte, will man guten Flammschutz auf diesem Wege erzielen, die Menge dieser Säurefunktion im Polymer nicht zu hoch sein, um die Abwasserbelastung bei einer wäßrigen

Acrylnitrilcopolymerisation oder durch spätere Verwendung von Wasser als Prozessmedium gering zu halten.

Aufgabe der Erfindung war, eine weitere, deutlich verbesserte Flammschutzwirkung in Acrylnitril(co)-polymerisaten, möglichst ohne Gegenwart von Halogenverbindungen (Zusätze oder Copolymere) zu erzielen, ohne dabei den Aufbau der Acrylnitril(co)polymerisate durch einen Monomereinbau der Flammschutzmittel zu belasten. Dabei sollen die Zusätze auch gut verträglich und nicht auswaschbar sein. Weitere Aufgaben und ihre Lösungen sind der weiteren Beschreibung zu entnehmen.

Es wurde nun gefunden, daß bestimmte Phosphorester B) auf Basis von Phosphinsäure-, Phosphonsäure- und Phosphorsäureestern von Polyphenolen (der Formeln (I), (VI) und (IX)), vorzugsweise von Polyphenolkondensationsprodukten aus Phenolen mit Aldehyden oder Ketonen, insbesondere vom Novolak-Typ, allein oder in Kombination miteinander, bzw. auch in Mischung mit freien Polyphenolen oder den genannten Kondensationsprodukten, als Zusatz zu Acrylnitril(co)polymerisaten Polymermischungen bzw. daraus hergestellte Formmassen, insbesondere Fasern mit überraschend verbesserten flammhemmenden Eigenschaften ergeben. Wenn die zugrundegelegten Acrylnitril(co)polymerisate Carboxylfunktionen (z.B. durch Einbau von Monomeren, die Carbonsäurereste in die Polymerisate einführen) enthalten, die entweder in freier Säureform oder in ganz oder vorzugsweise teilweise neutralisierter Form als Carbonsäuresalze vorliegen, kann die Menge (3 bis 25 Gew.-%) an zugefügten Phosphorestern B) relativ niedriger eingestellt werden, um einen vergleichbar befriedigenden bis guten Flammschutz zu erreichen. Solche carboxylgruppenhaltigen, vorzugsweise zumindest teilweise in Salzform vorliegende Acrylnitrilcopolymerisate werden daher bevorzugt zur Mischung mit den Phosphorestern B) eingesetzt.

Gegenstand der Erfindung sind somit flammgeschützte, phosphorhaltige Mischungen und daraus hergestellte Acrylnitril(co)polymerisatformkörper, einschließlich Fasern, auf Acrylnitril(co)polymerisat-Basis, die

A) 97 bis 75 Gew.-%, vorzugsweise 95 bis 85 Gew.-%, insbesondere 93 bis 88 Gew.-% eines Acrylnitril(co)polymerisats mit mindestens 50 Gew.-% Acrylnitril und

B) 3 bis 25 Gew.-%, vorzugsweise 5 bis 15 Gew.-%, insbesondere 7 bis 12 Gew.-% Phosphorester B) aus der Reihe

Phosphinsäureester von Polyphenolen, entsprechend der Formel (I)

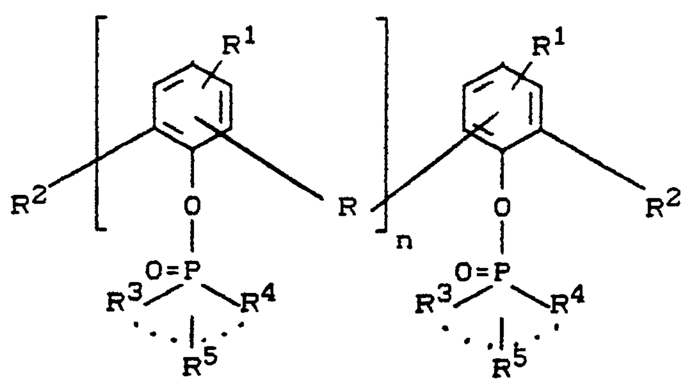

(I),

worin

| | |
|---|---|
| n | eine ganze Zahl von 1 bis 20, bevorzugt von 1 bis 10, insbesondere 2 bis 8, |
| R | eine geradkettige oder verzweigte Alkylengruppe mit 1 bis 4 Kohlenstoffatomen, vorzugsweise eine Methylengruppe, eine gegebenenfalls alkylsubstituierte Cycloalkylengruppe mit 5 bis 9 Kohlenstoffatomen, oder, wenn n = 1 ist, auch eine direkte Bindung, eine Sulfonyl- oder Carbonylgruppe bzw. Sauerstoff- oder Schwefelbrücke, |
| $R^1$ und $R^2$ | unabhängig voneinander Wasserstoff, Alkylgruppen mit 1 bis 12, vorzugsweise 1 bis 8 Kohlenstoffatomen, insbesondere Methyl, gegebenenfalls alkylsubstituierte Cycloalkylgruppen mit 5 bis 9 Kohlenstoffatomen, gegebenenfalls alkylsubstituierte Arylgruppen mit 6 bis 10 Kohlenstoffatomen, |
| $R^3$ und $R^4$ | Alkylgruppen mit 1 bis 4 Kohlenstoffatomen und/oder Arylgruppen mit 6 bis 10 Kohlenstoffatomen sind, wobei $R^3$ und $R^4$ im Fall von Alkylgruppen auch durch eine Einfach- oder Doppelbindung zu einem Ring verbunden sein können und der so über das Phosphoratom gebildete Ring Alkylgruppen $R^5$ mit 1 bis 4 Kohlenstoffatomen tragen kann, bedeutet; |

und/oder
eines Phosphonsäureesters VI von Polyphenolen, der Phosphonsäuregruppen

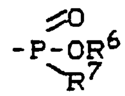

an einem phenolischen Rest und/oder cyclische Phosphonsäuregruppen

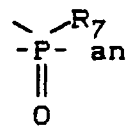 an

zwei benachbarte phenolische Reste gebunden enthält, charakterisiert durch die Formel (VI)

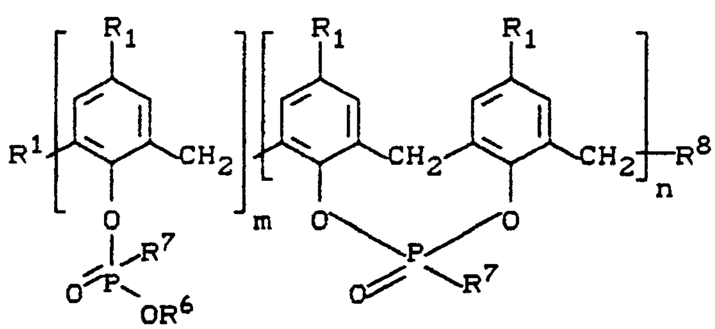 (VI),

worin $R^1$
Wasserstoff oder Alkyl mit 1 bis 12 Kohlenstoffatomen, bevorzugt 1 bis 8 Kohlenstoffatomen, insbesondere Methyl,
$R^8$
den folgenden Formeln (VII) oder (VIII)

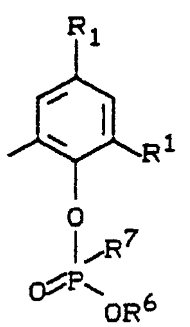 (VII) 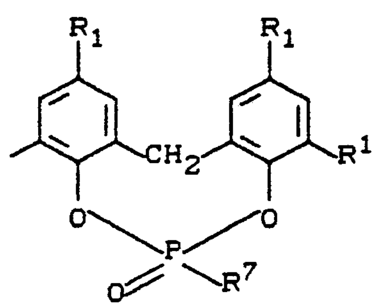 (VIII)

$R^6$
Phenyl, wobei dieses durch $C_1$-$C_4$-Alkyl, Aryl und Aralkyl, bevorzugt Methyl, Phenyl, Benzyl oder 2-Phenylethyl, substituiert sein kann, und
$R^7$
Alkyl mit 1 bis 8 Kohlenstoffatomen oder bevorzugt mit $C_1$-$C_4$-Alkyl substituiertem $C_6$-$C_{10}$-Aryl, bevorzugt Methyl bzw. Phenyl, ist,
entspricht und wenn m gleich Null ist, gleich n mindestens 1 sein muß und $R^8$ gleich dem Rest (VIII) sein muß
und wenn n gleich Null ist, m mindestens 2 und $R^8$ gleich dem Rest (VII) sein muß,
und/oder

eines Polyphosphorsäureesters von Polyphenolen, entsprechend der Formel (IX)

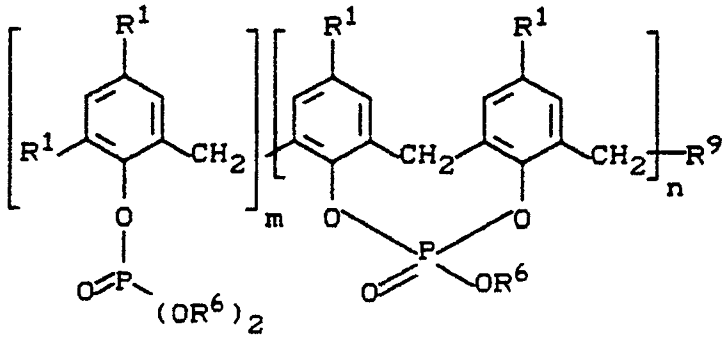

(IX)

worin
$R^9$
der Rest (X) oder (XI) der Formeln

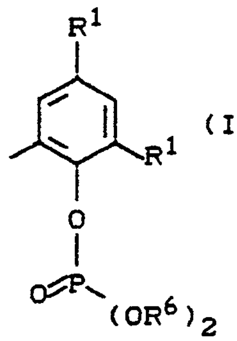

(IX)

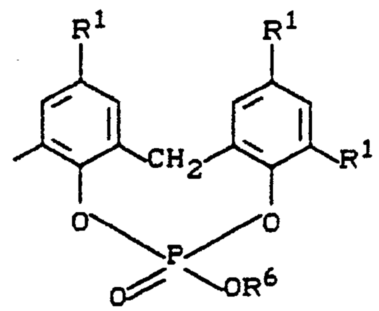

(XI)

ist, und
$R^1$ und $R^5$ die bereits angegebene Bedeutung haben,
wobei, wenn m gleich Null ist, n mindestens 1 und $R^9$ gleich (XI) sein muß, und wenn n gleich Null ist, m mindestens 2 und der Rest $R^9$ gleich dem Rest (X) sein muß,
und wobei in (VI) und (IX) m ganze Zahlen bis 12, n ganze Zahlen bis 5 sein können und die Kernzahl des Polyphenolanteils von 3 bis 9 (Zahl der Benzolringe) und nicht höher als 12 liegt,
sowie gegebenenfalls weitere, übliche Zusatzstoffe in üblichen Mengen enthalten.

Die genannten Polyphenolphosphinate (I), -phosphonate (VI) und -phosphate (IX) können auch miteinander gemischt als Flammschutzmittel verwendet werden.

Der Vergleich der Wirkung der drei Substanzklassen hat ergeben, daß hinsichtlich des Flammschutzeffektes eine Abstufung zu erkennen ist. Den höchsten Einfluß auf die Flammhemmung haben die Polyphenol-phosphinate (I) vor den -phosphonaten (VI). Daher ist die Verwendung der Polyphenolphosphinate der Formel (I) und ihrer bevorzugten Formeln (II) bis (V) besonders bevorzugt.

Polyphenolphosphinsäureester (I)

Die erfindungsgemäß eingesetzten Phosphinsäureester (I) sind Alkyl- und Arylphosphinsäureester von Bisphenolen und Polyphenolen, welche Kondensationsprodukte von Phenolen mit Aldehyden oder Ketonen sind.

Bevorzugt werden dabei Alkyl- und Arylphosphinsäureester (I) von Bisphenolen der Formel (II) und von höhermolekularen Phenol-Formaldehyd-Kondensationsprodukten (insbesondere von Novolaken) der Formel (III).

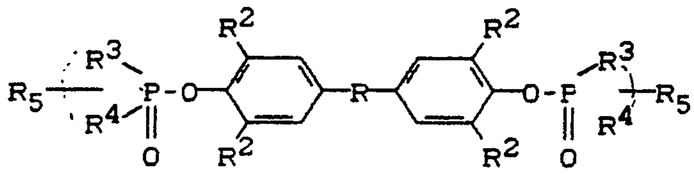

(II)

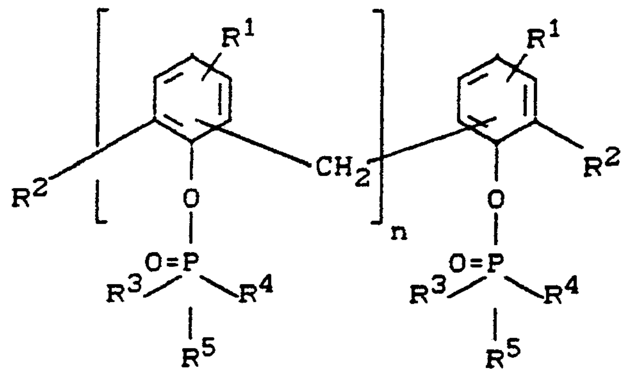

(III)

wobei
die Substituenten der $-CH_2$-Gruppe in den o- oder p-Stellungen zur phenolischen Gruppe erfolgt (wenn diese Stellung nicht mit $R^1$ blockiert sind),
und wobei

| | |
|---|---|
| n | eine ganze Zahl von 2 bis 15, bevorzugt von 2 bis 10, insbesondere 2 bis 8, |
| R | eine zweiwertige Gruppe wie eine Methylen- oder Isopropylidengruppe, eine Sulfonyl- oder Carbonylgruppe oder eine Sauerstoff- oder Schwefelbrücke, |
| $R^1$ | Wasserstoff oder eine Alkylgruppe mit 1 bis 12, vorzugsweise 1 bis 8 Kohlenstoffatomen, bevorzugt Methyl, |
| $R^2$ | Wasserstoff oder eine Alkylgruppe mit 1 bis 4 Kohlenstoffatomen, |
| $R^3$ und $R^4$ | unabhängig voneinander Methyl-, Ethyl- oder Phenylgruppen, oder die Reste $R^3$ und $R^4$ gemeinsam die gegebenenfalls mit $R^5$ substituierte Butyliden- bzw. Alkylbutylidengruppe darstellen. |

Ganz besonders bevorzugt sind Verbindungen der Formel (IV) und (V)

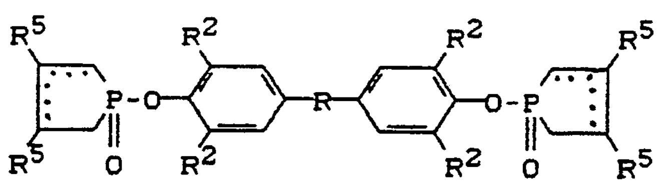

(IV)

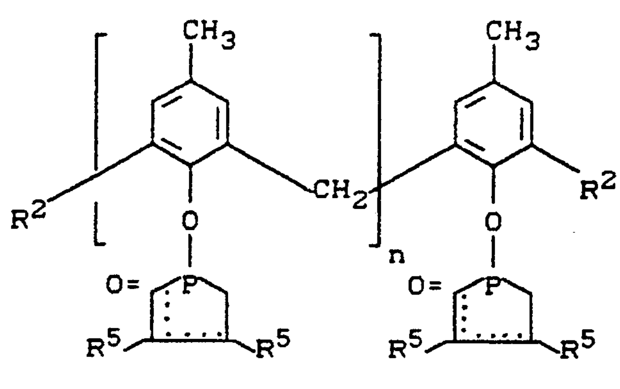

(V)

worin

| | |
|---|---|
| n | eine ganze Zahl von 2 bis 8 ist, |
| R | die oben beschriebene Bedeutung hat, |
| $R^2$ und $R^5$ | Wasserstoff oder Methylgruppen darstellen. |

Acrylnitril(co)polymerisate A)

Die Acrylnitril(co)polymerisate A) sollten mindestens 60 Gew.-%, vorzugsweise mindestens 75 Gew.-% und besonders bevorzugt mindestens 85 Gew.-% Acrylnitril enthalten und können bis 45 Gew.-%, vorzugsweise bis 12 Gew.-% an neutralen Comonomeren, wie z.B. Styrol, Isobuten, Methacrylnitril, Methyl-, Ethyl(meth)acrylat, Vinylacetat, Vinylbenzoat, (Meth)acrylamid, N-Methyl-, N-Ethyl-, N-Dimethyl(meth)-acrylamid, N-Hydroxymethyl-, N-Methoxymethyl(meth)acrylamid, N-Phenyl(meth)acrylamid, N-Vinylacetamid, N-Vinylformamid, N-Vinylpyrrolidon, N-Vinylcaprolactam, Vinyl-methyl-, Vinylethylether, Vinylimidazol, Vinyltriazol aufweisen sowie 0,1 bis 5 Gew.-%, bevorzugt bis 3 Gew.-% an sauren, funktionellen Monomeren zu Anfärbbarkeitsverbesserungen, z.B. (Meth)Allyl-, Vinyl-, Styrolsulfonat, (Meth)-Acrylamidomethylpropansulfonat, Vinylphosphonat, (Meth)acrylamidoalkylphosphonat oder auch 1 bis 10 Gew.-% an basischen Monomeren wie Dimethylaminoethyl(meth)acrylat, N-Dimethylaminopropyl(meth)-acrylamid u.a. Vorzugsweise sind 10 bis 460 mValsäure/kg/Polymer einer Sulfon- oder Phosphonsäure im Polymer eingebaut (mVal = Milliäquivalent).

Besonders bevorzugt werden Acrylnitril(co)polymerisate A), die neben den neutralen Comonomeren aus Carboxylgruppen (und davon abgeleiteten Salzen 1- bis 3-wertiger Kationen) enthaltenden Comonomeren aufgebaut sind, eingesetzt. Bezogen auf Carboxylgruppen, sollen 500 bis 2800 mVal/kg Polymer vorliegen, bevorzugt 700-2100 mVal/kg-Polymer.

An Säuren, welche derartige Gruppierungen dem Polymer verleihen, seien aufgeführt: (Meth)Acrylsäure, Itaconsäure, Malein-Fumarsäure, Zimtsäure, Vinylbenzoesäure, Isopropenylbenzoesäure, (Vinyl-phenyl)-essigsäure, (Isopropenyl-phenyl)essigsäure, (Meth)Acrylamidoessigsäure, (Meth)-Acrylamidomethylpropancarbonsäure, (Meth)Acrylamidobenzoesäure, Vinylidencarbonsäure u.a. Bevorzugt werden jedoch (Meth)Acryl- und Itaconsäure.

Die Synthese der Acrylnitrilcopolymerisate erfolgt nach bekannten Methoden der Lösungs-, Suspensions-, Emulsions- oder Massepolymerisation, wobei in der Regel bei der Suspensions- und Emulsionsmethode in Wasser als Reaktionsmedium gearbeitet wird. Bei der Herstellung der carboxylgruppenhaltigen Produkte ist es möglich, bereits (teilweise) die Salze der entsprechenden Säuren zu verwenden. Berechnet auf den Carboxyfunktionengehalt der Polymerisate von 500 bis 2800 mVal/kg, bevorzugt 700-2100 mVal/kg, können 60 bis 0,5 % dieser Funktionen äquivalentmäßig als Salz, vorzugsweise 1- bis 2-wertiger Kationen bei der Polymerisation eingesetzt werden, d.h. man verwendet dabei ein Gemisch aus freier Säure und dem davon abgeleiteten Salz. Auch eine nachträgliche Reaktion des Carboxylstrukturen tragenden Polymers mit Salz kann zur ganzen oder teilweisen Absättigung der Säure führen.

Enthält das Acrylnitrilcopolymerisat, das für die Verarbeitung im Gemisch mit den Phosphorderivaten der Polyphenole zu Fasern/Fäden verwendet wird, neben den schwächeren Carboxylgruppen noch die stärkeren Säurefunktionen einer Sulfon- oder Phosphonsäure, dann sollte, für den Fall eines bereits hier durchgeführten teilweisen Umsatzes zu Salzen, dieser Anteil 60 bis 0,5 % der Äquivalenz der Summe aus starker und schwächerer Säure betragen, wobei mit zunehmendem Säuregehalt des Polymers die Menge, welche ins Salz überführt wurde, immer geringer werden soll.

Die Molekulargewichte der eingesetzten Acrylnitrilcopolymerisate betragen, ausgedrückt als K-Wert (Fikentscher, Cellulose Chemie 13, 58 (1932)) 30 bis 130, vorzugsweise 70 bis 95.

Erfindungsgemäße Phosphorverbindungen B) als flammhemmende Zusätze

I. Polyphenol-phosphinsäureester

Die erfindungsgemäß eingesetzten Phosphinsäureester sind die Dialkyl-, Diaryl- und Alkyl/aryl-phosphinsäureester von Bis- und Polyphenolen (Novolaken). Da die Phosphinsäuren nicht direkt in die erfindungsgemäßen Ester umgewandelt werden können, sind ihre reaktiveren Derivate zur Esterherstellung zu verwenden. Diese sind die Säurechloride, die durch Abspaltung von Chlorwasserstoff, und Phenylester (ebenfalls aus den Säurechloriden), die durch Abspaltung von Phenol (Umesterung) mit den Polyphenolen zu den erfindungsgemäßen Estern umgesetzt werden.

Beispiele für Phosphinsäuren sind Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäure sowie 1-Hydroxy-1-oxo-phospholen, 1-Hydroxy-1-oxo-3-methylphospholen und 1-Hydroxy-1-oxo-3,4-dimethyl-phospholen.

Herstellungsverfahren für Phosphinsäuren und ihre Derivate wie Chloride und Phenylester sind bekannt und in der Literatur zusammengestellt (Methoden der organischen Chemie (Houben-Weyl), Band XII/1, Seiten 217 bis 266 und Band E2, Seiten 123 bis 221). Die Umsetzung der Phosphinsäurechloride mit Bis- und Polyphenolen erfolgt bei Temperaturen von 180 bis 200 °C unter Abspaltung von Chlorwasserstoff recht langsam. Unter Mitverwendung von Katalysatoren wie Magnesiumchlorid gelingt dieses bereits bei niedrigeren Temperaturen und in kürzeren Zeiten. Bei niedrigeren Temperaturen müssen bei der Veresterung von Novolaken aus Gründen der Viskosität inerte, hochsiedende Lösungsmittel mitverwendet werden. Üblicherweise werden als Katalysatoren Magnesiumchlorid oder tertiäre Amine eingesetzt. Bei dem wesentlich schneller ablaufenden Umesterungsverfahren wird als Katalysator ebenfalls Magnesiumchlorid verwendet. Die Temperaturen liegen wieder bei 200 °C.

Die angeführten Polyphenolphosphinsäureester (I) werden auch in der bisher unveröffentlichten deutschen Patentanmeldung DE-P 39 25 791.6, (Le A 27 040) beschrieben.

Polyphenole, als Ausgangsmaterialien für B) (I, VI und IX)

Bisphenole und Novolake werden nach bekannten Verfahren hergestellt (siehe für Bisphenole: H. Schnell und H. Krimm, Angew. Chemie 75 (1963), 662 bis 668; für Novolake: Methoden der organischen Chemie (Houben-Weyl), Band XIV/2, Seiten 193 bis 292 und Ullmann's Encyclopädie der Technischen Chemie, 4. Auflage, Band 18, Seiten 245 bis 257.

Als geeignete Bisphenole seien erwähnt:

Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfone
sowie deren kernalkylierte Derivate.

Die wichtigsten Bisphenole im Sinne der Erfindung sind: 4,4'-Dihydroxydiphenyl, 2,2-Bis-(4-hydroxyphenyl)-propan, Bis-(4-hydroxyphenyl)-methan, 4,4'-Dihydroxybenzophenon, 4,4'-Dihydroxydiphenylether, 4,4'-Dihydroxydiphenylsulfid, 4,4'-Dihydroxydiphenylsulfon sowie deren kernsubstituierte Derivate, wobei als Substituent vorzugsweise $CH_3$ in Frage kommt. Ein kernmethyliertes Derivat ist z.B. 2,2-Bis-(4-hydroxy-3,5-dimethylphenyl)-propan.

Besonders bevorzugte Diphenole sind 2,2-Bis-(4-hydroxyphenyl)-propan, 4,4'-Dihydroxydiphenyl, 4,4'-Dihydroxydiphenylether, 4,4'-Dihydroxydiphenylsulfon, 4,4'-Dihydroxybenzophenon und 2,2-Bis-(4-hydroxy-3,5-dimethylphenyl)-propan.

Es können auch Gemische von Diphenolen eingesetzt werden.

Geeignete Novolake sind beispielsweise Kondensationsprodukte aus Formaldehyd und Phenolen der allgemeinen Formel

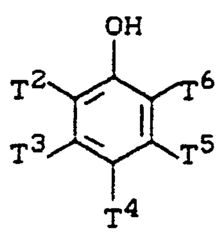

worin

$T^2$ und $T^6$ Wasserstoff bezeichnen und $T^3$, $T^4$ und $T^5$ wahlweise gleich Wasserstoff oder $C_1$-$C_{20}$-Alkyl-, Cycloalkyl-, $C_6$-$C_{10}$-Arylgruppen sein können oder worin $T^2$ und $T^4$ Wasserstoffatome bezeichnen und $T^3$, $T^5$ und $T^6$ gleich den obengenannten Resten sein können.

Charakteristische Beispiele für Phenole sind, ohne damit eine Einschränkung zu treffen Phenol, o-Kresol, m-Kresol, p-Kresol, 2,5-Dimethyl-, 3,5-Dimethyl-, 2,3,5-Trimethyl-, 3,4,5-Trimethyl-, p-t-Butyl-, p-n-Octyl-, p-Stearyl-, p-Phenyl-, p-(2-Phenylethyl)-, o-Isopropyl-, p-Isopropyl-, m-Isopropylphenol sowie zahlreiche andere Phenole.

Bevorzugt eingesetzt werden Phenol, o-Kresol, m-Kresol, p-Kresol, p-t-Butylphenol und o-t-Butylphenol und p-Octylphenol. Es können aber auch Gemische aus diesen Phenolen eingesetzt werden.

Bevorzugt eingesetzte Novolake sind demnach beispielsweise

Phenol/Formaldehyd-Novolak,
o-Kresol/Formaldehyd-Novolak,
m-Kresol/Formaldehyd-Novolak,
p-Kresol/Formaldehyd-Novolak,
t-Butylphenol/Formaldehyd-Novolak,
p-Octylphenol/Formaldehyd-Novolak.

Besonders bevorzugt wird der p-Kresol/Formaldehyd-Novolak.

Polyphenolphosphonate (VI)

Die erfindungsgemäß einzusetzenden Phosphonsäureester VI sind Dialkyl- und Diarylphosphonsäureester von Polyphenolen, vorzugsweise von Novolaken. Da die Phosphonsäuren nicht direkt in die erfindungsgemäßen Ester umgewandelt werden können, verwendet man auch zu ihrer Herstellung die reaktiveren Derivate wie Säurechloride oder Phenylester.

Beispiele für Phosphonsäuren sind Methylphosphonsäure, Ethylphosphonsäure, Phenylphosphonsäure, p-Tolylphosphonsäure und Naphthylphosphonsäure.

Herstellungsverfahren für Phosphonsäuren und ihre Derivate wie Chloride und Phenylester sind bekannt und in der Literatur zusammengestellt (Ullmann's Ecyclopädie der technischen Chemie, 4. Auflage, Bd. 18, Seiten 385 bis 388, 1979 und Houben-Weyl, Methoden der organischen Chemie, Band XII/1, Seiten 423 bis 525).

Geeignete Polyphenole/Novolake sind bereits bei (I) beschrieben.

Die Umsetzung der Phosphonsäurechloride mit Novolaken erfolgt bei Temperaturen von 180 bis 200° C unter Abspaltung von Chlorwasserstoff recht langsam. Unter Mitvrwendung von Katalysatoren gelingt dieses bereits bei niedrigeren Temperaturen und in kürzeren Zeiten. Üblicherweise werden als Katalysatoren Magnesiumchlorid, tertiäre Amine oder Titantetrabutylat verwendet. Bei niedrigeren Temperaturen müssen aus Gründen der Viskosität inerte, hochsiedende Lösungsmittel mitverwendet werden.

Zur Herstellung der Ester werden im sogenannten Umesterungsverfahren Novolake mit Diarylestern der Phosphonsäuren und im sogenannten Säurechloridverfahren Gemische von Novolaken und Phenolen mit Phosphonsäuredichloriden zur Umsetzung gebracht. Beim Umesterungsverfahren werden bevorzugt die Diphenylester eingesetzt. Bei beiden Verfahren können als zusätzliche Phenole Aryl- und Aralkylphenole wie 4-Phenylphenol, Benzylphenol, 1-Phenylethyl-phenol, 1-Methyl-1-phenylethyl-phenol und 2,4-Di-(phenylethyl)-phenol mitverwendet werden.

Als Besonderheit bei den Phosphonsäureestern von Novolaken ist festzustellen, daß aufgrund der Mehrwertigkeit der Phosphonsäuren wie auch der von Novolaken sowohl offene als auch cyclische Strukturen auftreten können, je nachdem, ob jeweils eine Valenz oder 2 Valenzen jeweils eines Moleküls miteinander reagiert haben. Vernetzungsreaktionen aufgrund der Mehrwertigkeit der Reaktionspartner treten üblicherweise aber nicht auf.

Erfindungsgemäß besonders geeignete Phosphonsäureester gemäß Formel (VI) sind beispielsweise die Umsetzungsprodukte aus 1 Mol Methylphosphonsäurediphenylester bzw. Phenylphosphondiphenylester und 1 bis 2 Äquivalent Novolak.

Polyphenolphosphate (IX)

Diese erfindungsgemäß geeigneten Phosphorverbindungen sind generell nach bekannten Verfahren herstellbar (siehe für Novolake: Houben-Weyl, Methoden der organischen Chemie, Band XIV/2, Seiten 193 bis 292 und Ullmann's Encyclopädie der technischen Chemie, 4. Auflage, Band 18, Seiten 245 bis 257; für Phosphate: beispielsweise Ullmann's Encyclopädie der technischen Chemie, 4. Auflage, Band 18, Seiten 389 bis 391, 1979 und Houben-Weyl, Methoden der organischen Chemie, Band 12/1, Seite 299 bis 374).

Die Polyphenole werden wie schon geschildert hergestellt und eingesetzt.

Besonders geeignete Novolake sind Kondensationsprodukte aus Formaldehyd und Phenolen mit den schon erläuterten Beispielen und Bevorzugungen.

Zur Herstellung der Ester werden im sogenannten Umesterungsverfahren Novolake mit Triarylestern der Phosphorsäure und im sogenannten Säurechloridverfahren Gemische von Novolaken und Phenolen mit Phosphoroxydchlorid zur Umsetzung gebracht. Beim Umesterungsverfahren wird bevorzugt Triphenylphosphat eingesetzt. Die beiden Verfahren können als zusätzliche Phenole Aryl- und Aralkylphenole wie 4-Phenylphenol, Benzylphenol, 1-Phenylethyl-phenol, 1-Methyl-1-phenyl-ethyl-phenol und 2,4-Di-(phenylethyl)-phenol mitverwendet werden.

Als Besonderheit bei den Phosphorsäureestern von Novolaken ist festzustellen, daß aufgrund der

Mehrwertigkeit der Phosphorsäure wie auch der von Novolaken sowohl offene als auch cyclische Strukturen auftreten können, je nachdem, ob jeweils eine Valenz oder 2 Valenzen jeweils eines Moleküls miteinander reagiert haben. Vernetzungsreaktionen aufgrund der Mehrwertigkeit der Reaktionspartner treten üblicherweise nicht auf.

Erfindungsgemäß geeignete Polyphenolphosphate sind beispielsweise die Umsetzungsprodukte aus 1 Mol Triphenylphosphat bzw. Phosphorsäuretrichlorid und 1 oder 2 Äquivalent Novolak. Mengenverhältnisse zwischen 1 und 2 Äquivalent Novolak sind ebenfalls möglich. Die 3. Valenz der Phosphorsäure ist, wie oben dargestellt, an Phenol oder ein substituiertes Phenol gebunden.

Die beschriebenen Phosphorderivate sind in den für Polyacrylnitril bekannten, vorzugsweise hochpolaren Lösungsmitteln wie Dimethylformamid oder Dimethylacetamid löslich und ergeben mit den Acrylnitril(co)polymerisaten klare Spinnlösungen in diesen Lösungsmitteln.

Die Herstellung von Fasern und Fäden aus den beschriebenen Mischungen kann nach den bekannten Verfahren erfolgen. Hier sind in sehr begrenztem Maße zu benennen das Schmelzspinnverfahren, bei welchem vorzugsweise niedermolekulare Acrylnitrilcopolymerisate eingesetzt werden mit K-Werten von 30 bis 70, die keine oder nur wenige Carboxylfunktionen enthalten, und z.B. Phosphinsäureester von Polyphenolen, deren Erweichungsbeginn bei 90 bis 130 °C liegt.

Bevorzugt werden das klassische Naß- oder Trockenspinnverfahren zur Herstellung von Fasern und Fäden. Dabei wird üblicherweise in heißem Wasser eine Wäsche des lösungsmittelhaltigen Spinnguts und auch die Verstreckung in heißem Wasser vorgenommen. Es hat sich gezeigt, daß die hier beschriebenen P-Derivate der Polyphenole bei den Stufen der Spinngutwäsche und Verstreckung nicht aus dem Faden ausgewaschen werden, erkennbar am P-Gehalt der erhaltenen Fasern.

Anwendbar ist jedoch auch ein Verfahren der Faser- und Fädenherstellung, bei welchem eine Naßwäsche des Spinnguts und eine Naßverstreckung vermieden werden. Dies wird z.B. in EP 98 477 beschrieben.

Wählt man als Basis Acrylnitril(co)polymerisate, die frei sind von Carboxylgruppen aufweisenden Comonomeren, dann muß man den Zusatz an P-haltigen Verbindungen im höheren Bereich wählen, um guten Flammschutz zu erzielen. Hier ist der P-Anteil im Polymerengemisch aus Acrylnitrilcopolymer und den P-Derivaten der Polyphenole auf 1,5 bis 3,5 Gew.-% einzustellen, während die Kombination von P-modifizierten Polyphenolen mit Acrylnitrilcopolymerisaten, charakterisiert durch einen Gehalt von 500 bis 2800 mVal/kg, bevorzugt 700-2100 mVal/kg Polymer an Carboxylfunktionen auch bereits zu einer verringerten Brenneignung führt, wenn der P-Gehalt im Gemisch nur bei ≦2,0 % liegt. Die Umsetzung der Säure in die Salzform mit 1- bis 3-wertigen Metallen führt dabei zu einer weiteren Verbesserung der Brennresistenz.

Die Zugabe der erfindungsgemäßen Phosphinsäure- (I), Phosphonsäure- (VI), Phosphorsäureester (IX) der Polyphenole erfolgt bei der Zubereitung der Polymerschmelze bzw. Polymerlösung des Acrylnitrilcopolymerisats oder wird kurz vor dem Verspinnen über eine Stammlösung, die neben diesem P-Träger eventuell ein weiteres Acrylnitrilcopolymerisat als Schleppsubstanz sowie gegebenenfalls noch Füllstoffe, Pigmente, Farbstoffe, Stabilisatoren enthält, dem zur Spinndüse fließenden Polymerstrom zugeführt. Es können auch Mischungen der einzelnen P-haltigen Polyphenolderivate zugegeben werden.

Es hat sich auch gezeigt, daß weitere Zusätze in Mengenanteilen bis zu 10 Gew.-% von nicht P-derivatisierten Polyphenolen, d.h. der nicht phosphorhaltigen Verbindungen, im Verein mit den erfindungsgemäßen Polyphosphinaten (I), Polyphosphonaten (VI) oder Polyphosphaten (IX) eine, wenn auch geringe, weitere Flammschutzverbesserungen bewirken, die noch über derjenigen, durch den P-Derivatzusatz B) allein verursachten, liegt. Als weitere Polyphenole sind auch Polyhyroxystyrole, wie z.B. Polypara-hydroxy)-styrol verwendbar.

Die Säurefunktionen aus dem Acrylnitrilcopolymerisat können nicht nur während oder nach seiner Herstellung teilweise in die Salzform überführt werden, sondern man kann auch während der Verarbeitung des Gemisches aus Acrylnnitrilcopolymerisat und Phosphor-Novolaken zu Fasern/Fäden in der Spinnlösung, vor, während oder nach der Verstreckung, nach/vor einer Trocknung oder Dämpfung diese Reaktion vornehmen.

Salze, die verwendet werden können, sind z.B. wasserlösliche Salze wie die Chloride, Hydrogencarbonate, Acetate, Formiate $Na^+$, $Ca^{2+}$, $Mg^{2+}$, $Zn^{2+}$, $Cu^{2+}$, $Mn^{2+}$ oder auch die wenig wasserlöslichen Hydroxide oder Carbonate von $Zn^{2+}$, $Ca^{2+}$, $Al^{3+}$, $Mg^{2+}$. Hier erfolgt die Salzreaktion aus wäßriger Suspension. Will man in Spinnlösung bereits eine Reaktion einleiten, und zwar in den bekannten organischen Lösungsmitteln für Polyacrylnitrile, wie z.B. Dimethylacetamid, Dimethylformamid, Dimethylsulfoxid, dann kann man z.B. darin lösliche Acetate des $Mg^{2+}$, $Ca^{2+}$, $Zn^{2+}$ einsetzen. Dabei muß man natürlich über das Molgewicht des Acrylnitrilcopolymerisates und seine Konzentration sowie die des Salzes eine Vernetzung des Polymeren in der Lösung vermeiden. Bewährt hat sich hier der Zusatz von Komplexbildnern, die sowohl die Vernetzung inhibieren als auch als Farbaufheller bzw. Thermostabilisatoren wirken. Solche Verbindungen sind beispielsweise Oxalsäure, Nitrilotriessigsäure, Ethylendiamintetraessigsäure, Acetylaceton.

Die Carboxylgruppen und eventuell andere Säurefunktionen können nicht nur durch eine Kationenart, sondern durch verschiedene Kationen teilweise oder ganz abgesättigt sein.

Setzt man beispielsweise ein Acrylnitrilcopolymerisat zur Faserherstellung ein, welches bereits von der Synthese aus 0,5 bis 60 % seiner gesamten Säurefunktionen äquivalentmäßig in der Salzform vorliegen kann, so kann es auf dem Weg zur Faser mit einer anderen Kationenart behandelt werden. Der Anteil, welcher von der freien Säureform in die des Salzes überführt wird, kann damit auf 100 % der Äquivalenz aller Säurefunktionen der Faser ansteigen.

Mitverarbeitet für die Faserherstellung können 0 bis 5 Gew.-% an Füllstoffen und/oder Pigmenten sowie 0 bis 5 % weiterer üblicher Zusatzmittel wie Licht-, Thermo-, Farbstabilisatoren, Aufheller, Farbstoffe etc.

Füllstoffe sind z.B. $Al(OH)_3$, feinteiliges $Mg(OH)_2$, (z.B. Siluma® 5e oder Siluma 7 der Fa. Kyowa, Japan), $Al_2O_3$, $AlOH(OCOCH_3)_2$, $SiO_2$, $SnO_2$, $TiO_2$, $Sb_2O_3$, $Sb_2O_5$, Talkum, Borate, $Ca_3(PO_4)_2$, Farbstoffe, Ruß.

Die hier beschriebenen Mischungen aus Phosphorverbindungen und Carbonsäurefunktionen enthaltenden Acrylntrilpolymerisaten können auch für die Herstellung von Precursorfasern/fäden eingesetzt werden, die dann zur C-Faser weiterverarbeitet werden.

Testmethoden

Um die Menge der einpolymerisierten starken Säure, (z.B. Sulfonsäure und der incorporierten Carboxylgruppen (den schwächeren Säurefunktionen) im Acrylnitril(co)polymerisat zu bestimmen, werden ca. 1 g getrocknetes Polymerisat in Dimethylsulfoxid (50 ml) gelöst. Diese Lösung läßt man über eine mit einem Mischbettionenaustauscher (Ionenaustauscher V der Fa. Merck, Gemisch aus Kationen- und Anionenaustauscher) gefüllte Säule laufen, spült mit DMSO nach, setzt der Lösung einige Tropfen Phenolphthaleinlösung zu und titriert mit einer 0,1 n-Lösung von Tetrabutylammoniumhydroxid (TBAH) zunächst potentiometrisch bis zur maximalen Potentialänderung. Die bis dahin verbrauchte Menge an TBAH entspricht der Menge an starker Säure. Anschließend wird ohne Berücksichtigung der Potentialänderungen weiter titriert, bis zum Farbumschlag des Phenolphthaleins. Der dabei erreichte Verbrauch an TBAH gibt den Anteil der gesamten einpolymerisierten Säure an. Dieser Wert, verringert um den der starken Säure, ist das Maß für den Gehalt an freien, eingebauten Carboxylgruppen.

Will man nach einer Salzreaktion den Anteil der umgesetzten Säurefunktionen ermitteln, so wird die getrocknete Fasermenge ebenfalls in DMSO aufgenommen und ohne Vorbehandlung mit dem Ionenaustauscher titriert. Häufig ist die Probe aufgrund einer Vernetzung durch die Kationen nicht mehr in DMSO löslich. Man titriert auf diesem Wege nur noch diejenige Säuremenge, welche nicht mit dem Kation reagiert hat und setzt sie in Relation zu der Menge, die einpolymerisiert ist.

Natürlich ist auch eine direkte Bestimmung des Kationengehaltes, z.B. atomspektroskopisch, möglich.

Die Feststellung des flammretardierenden Effektes durch die beschriebenen Zusätze und speziellen Acrylnitrilcopolymerisate wird durch Bestimmung des Sauerstoffindex, auch Limited Oxygen Index (LOI) genannt, vorgenommen, und zwar sowohl an Mischungen der Polymeren als auch an Fäden/Fasern.

Zur Untersuchung der Polymermischungen werden mit einer hydraulischen Laborpresse (Fa. Paul Weber, Stuttgart-Uhlbach), ausgestattet mit einem Vakuumpreßwerkzeug (Modell 8), Tabletten hergestellt vom Gewicht 1,3 g, Durchmesser 26 mm und Dicke 2 bis 3 mm.

Der Brenntest erfolgt entsprechend ASTM D 2863 in einem Stanton-Redcroft FTA-Entflammbarkeitstestgerät. Die Tablette wird in der Brennkammer dieses Gerätes, einem Glaszylinder, vertikal stehend montiert und von oben mit einer Glühspirale (elektrisches Zündgerät EZG 3, Fa. E. Raczek) 5 Sekunden lang gezündet. Bei verschiedenen vorgewählten Sauerstoffkonzentrationen (Vol. %) in einem Sauerstoff-Stickstoff-Gemisch wird die Brenndauer gemessen. Durch Interpolation wird die Sauerstoffkonzentration bestimmt, bei der die Probe 30 Sekunden lang brennt und als LOI bezeichnet.

Untersucht man Fasern/Fäden, so werden sie auf einer Musterkarde gekrempelt (Fäden vorher schneiden). 1 g Fasern werden in einem oben und unten offenen Zylinder aus Drahtgeflecht eingeführt. Die Höhe des Zylinders beträgt 50 mm, der Durchmesser 35 mm, der Abstand der Drähte im Geflecht 6 Drähte/10 mm. Von oben wird der Faserbausch gezündet, wie angegeben, und ebenso wie die Preßlinge vermessen.

Die erfindungsgemäßen Fasern weisen Festigkeiten >2 cN/dtex auf. Die Waschbeständigkeit der chemischen Modifikation ist bei 40° C gegeben, wie z.B. der Gehalt an Kation und Phosphor vor und nach mehrmaliger Wäsche beweist.

Beispiele

I. Brennverhalten von Mischungen aus Acrylnitrilcopolymerisaten und Polyphenol, Polyphenolphosphinat,

Polyphenolphosphonat, Polyphenolphosphat, gemessen an Pulverpreßlingen nach der Methode des "Limited Oxygen Index" (LOI) (Tabelle 1)

Die nachfolgenden Acrylnitrilcopolymerisate a bis c wurden durch wäßrige Fällungspolymerisation bei pH = 2,5 in schwefelsaurem Medium hergestellt. Die Produkte hatte man mit $Na_2S_2O_8/Na_2S_2O_5$, als Initiator erhalten.

a: 93,9 Gew.-% AN/5,7 Gew.-% Methylacrylat/0,4 Gew.-% Natriummethallylsulfonat; K-Wert: 82.

b: 70 Gew.-% AN/30 Gew.-% Methylacrylat; K-Wert: 84.

c: 86,6 Gew.-% AN/13 Gew.-% Acrylsäure/0,4 Gew.-% Natriummethallylsulfonat; K-Wert: 82 (1810 mVal-Carboxlgruppen/kg-Polymer; 55 mVal-Sulfonsäure/kg-Polymer incl. Polymerendgruppen).

Eingesetzte Polyphenole und P-Derivate:

Beispiel 1

d: Novolak aus p-Kresol und Formaldehyd (OH-Zahl 468, Kernzahl ca. 5).

e: Novolakphosphinat, hergestellt durch Umsetzung des Novolaks d mit Ethylmethylphosphinsäurechlorid:

239,7 g (2 g Äquiv.) eines Novolaks aus p-Kresol und Formaldehyd (OH-Zahl 468, Kernzahl ca. 5) und 5,7 g (0,06 Mol) Magnesiumchlorid werden in einem 2 1-Kolben mit Heizbad, Rührer, Gaseinleitungsrohr für Stickstoff, Tropftrichter und Rückflußkühler unter Stickstoff auf 190 bis 200 °C erhitzt. Dann werden in 1 Stunde 253,1 g (2 Mol) Methylethylphosphinsäurechlorid zugetropft. Nach 72 Stunden ist die Chlorwasserstoffentwicklung abgeschlossen.

Nach Abkühlen wird der noch warme Ester in 2 1 Methylenchlorid aufgenommen und mit Wasser ohloridfrei gewaschen. Nach Trocknen der Methylenchloridlösung mit $Na_2$ $SO_4$ wird das Salz abfiltriert und die Lösung eingeengt. Die Ausbeute beträgt 402,4 g = 95,8 % der Theorie. Der Erweichungsbeginn liegt bei 98 °C auf der Kofler-Heizbank, der Phosphorgehalt bei 12,4 % (theoretisch 14,7 %) und die OH-Zahl bei O.

Beispiel 2

f: Novolakphosphinat, hergestellt durch Umsetzung von Novolak d mit 1-Chlor-1-oxo-3-methylphospholen (-2/3):

240,3 g (2 g Äquiv.) eines Novolaks aus p-Kresol und Formaldehyd (OH-Zahl 468, Kernzahl ca. 5) und 301,1 g (2 Mol) 1-Chlor-1-oxo-3-methyl-phospholin werden wie unter 1 zur Umsetzung gebracht. Die Aufarbeitung erfolgt ebenfalls wie unter 1.

Die Ausbeute beträgt 437,1 g = 93,3 % der Theorie. Der Erweichungsbeginn liegt bei 136 °C, der Phosphorgehalt bei 12,0 % (theoretisch 13,2) und die OH-Zahl bei O.

Beispiel 3

g: Polyphosphonat aus Bis-(4-hydroxyphenyl)-methan und Methylphosphonsäurediphenylester:

400,5 g Bis-(4-hydroxyphenyl)-methan (2,0 Mol), 501,4 g Methylphosphonsäurediphenylester (2,02 Mol) und 0,58 g Natriumphenolat (0,005 Mol) werden unter Stickstoff bei 250 °C intensiv in einem Autoklaven vermischt. Innerhalb von 3 h wird unter einem von 250 auf 100 mbar absinkenden Vakuum und bei einer von 250 °C auf 265 °C ansteigenden Temperatur Phenol über eine auf 100 °C beheizte Kolonne abdestilliert. Anschließend wird die Umesterung 5 h unter einem allmählich auf 0,3 mbar absinkenden Druck und einer auf 310 °C ansteigenden Temperatur fortgesetzt, wobei die Viskosität der Schmelze ansteigt. Man belüftet mit Stickstoff, läßt das Polymer bei stillstehendem Rührer absitzen und nimmt nach Abkühlen die erstarrte Schmelze in Methylenchlorid auf. Nach gründlichem Auswaschen mit Wasser und Abdampfen des Lösungsmittels erhält man eine Schmelze, die nach Abkühlen in einer Mühle zerkleinert wird. Die Ausbeute beträgt 500,4 g Prcdukt. Es hat eine relative Viskosität $\eta$rel von 1,10 (gemessen in Methylenchlorid; 0,5 g/100 ml Lösung). P-Gehalt = 11,7 %.

Beispiel 4

h: Novolakphosphonat aus Novolak d und Methanphosphonsäurediphenylester:

868,8 g (3,5 Mol) Methylphosphonsäurediphenylester, 861,2 g (7 g Äquiv.) eines Novolaks aus p-Kresol und

Formaldehyd (OH-Zahl 456, Kernzahl ca. 5) und 2 ml einer 0,5 %igen Titantetrabutylat-Lösung in Chlorbenzol werden in einem 4 1-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 4 Stunden bei fallendem Vakuum von 300 bis 3 mbar und Temperaturen von 190 bis 200 °C über Kolonne und Kühler 646,9 g Produkt (OH-Zahl 586) abdestilliert (7 Mol Phenol: 658,7 g). Anschließend wird 1 Stunde bei 220 °C und einem Vakuum von 3 mbar ausgeheizt.

Nach Abkühlen wird das Reaktionsprodukt in 4 l Methylenchlorid aufgenommen und mit Wasser chloridfrei gewaschen. Nach Trocknen der Methylenchlorid-Lösung mit Natriumsulfat wird filtriert und die Lösung eingeengt. Die Ausbeute beträgt 1032,7 g = 96,4 % der Theorie. Der Erweichungsbeginn liegt auf der Kofler-Heizbank bei 166 °C, der Phosphorgehalt beläuft sich auf 10,1 % (theoretisch 10,0 %) und die OH-Zahl auf 4.

Beispiel 5

i: Novolakphosphat aus Novolak d und Triphenylphosphat:

359,6 g (3 g Äquiv.) eines Novolaks aus p-Kresol und Formaldehyd (OH-Zahl 468, Kernzahl ca. 5), 652,6 g (2 Mol) Triphenylphosphat und 8,6 g Magnesiumchlorid (0,09 Mol) werden in einem 2 1-Kolben, der mit regelbarer Pilzheizhaube, Kapillare und kurzer Vigreux-Kolonne mit absteigendem Kühler versehen ist, nach Aufschmelzen 0,5 Stunden lang bei einem Vakuum von 300 mbar bei 200 °C erhitzt. Der über die Kapillare eingeleitete Stickstoffstrom sorgt für gute Durchmischung. Anschließend werden in 1,5 Stunden bei fallendem Vakuum von 20 bis 3 mbar und Temperaturen von 200 bis 210 °C über Kolonne und Kühler 282,3 g (3 Mol) Phenol abdestilliert. Anschließend wird 1 Stunde bei 250 °C und einem Vakuum von 3 mbar ausgeheizt.

Nach Abkühlen wird das Reaktionsprodukt in 2 l Methylenchlorid aufgenommen und mit Wasser chloridfrei gewaschen. Nach Trocknen der Methylenchlorid-Lösung wird das Natriumsulfat abfiltriert und die Lösung eingeengt. Die Ausbeute beträgt 694,9 g = 95,2 % der Theorie. Der Erweichungsbeginn liegt bei 75 °C auf der Kofler-Heizbank, der Phosphorgehalt bei 8,4 % (theoretisch 8,5 %) und die OH-Zahl bei 0.

Zusätze der verschiedenen Phosphor-Verbindungen I) f) g) h) i) zu Acrylnitrilpolymeren a) b) c) und d), sowie zusätzliche Zugabe freier Polyphenole e), werden hinsichtlich des LOI-Wertes in der Tabelle 1 wiedergegeben.

II. Einfluß der Carboxylfunktionen des Polyphenolphosphinzusatzes und einer teilweisen Vernetzung der Carboxylfunktionen auf das Brennverhalten von Fasern (Tabelle 2)

Vergleichsfaser 1 (ohne Acrylsäure-COOH; ohne Phosphinat-Zusatz)

Ein Acrylnitrilcopolymerisat (siehe Ia) aus 93,9 Gew.-% AN/5,7 Gew.-% Methylacrylat/0,3 Gew.-% Natriummethallylsulfonat, K-Wert: 82, wurde aus Dimethylformamid trockenversponnen, das Spinngut mit heißem Wasser gewaschen, 1:3,8 verstreckt, präpariert, unter Gleichlauf in einem Trommeltrockner bei 130 bis 140 °C getrocknet, bei 115 °C gedämpft und geschnitten.

Tabelle 1

| Gew.-% Polymer | | Gew.-% P-Derivat Polyphenol | | Gew.-% freies Polyphenol | | Gew.-% P im Gemisch | LOI-Wert (Vol. % $O_2$) |
|---|---|---|---|---|---|---|---|
| 100 | a | 0 | | 0 | | 0 | 19,0 |
| 90 | a | 10 | e | 0 | | 1,2 | 23,5 |
| 75 | a | 25 | e | 0 | | 3,0 | 30,0 |
| 92,5 | a | 7,5 | g | 0 | | 0,9 | 22,3 |
| 90 | a | 10 | i | 0 | | 0,8 | 21,8 |
| 100 | b | 0 | | 0 | | 0 | 20,2 |
| 85 | b | 15 | e | 0 | | 1,8 | 26,0 |
| 100 | c | 0 | | 0 | | 0 | 23,0 |
| 95 | c | 5 | f | 0 | | 0,6 | 26,5 |
| 90 | c | 10 | f | 0 | | 1,3 | 27,5 |
| 95 | c | 0 | | 5 | d | 0 | 25,0 |
| 90 | c | 5 | f | 5 | d | 0,6 | 27,0 |
| 95 | c | 5 | h | 0 | | 0,5 | 25,8 |
| 90 | c | 10 | h | 0 | | 10, | 25,8 |
| 95 | c | 5 | i | 0 | | 0,4 | 23,5 |

Versuchsfasern

A) Vergleichsserie 2

Es wurden a) eine klare 29 gew.-%ige Dimethylformamidlösung eines Polymerisats aus 86,7 Gew.-% AN/13 Gew.-% Acrylsäure/0,4 Gew.-% Natriummethallylsulfonat (AN/13 AS/MAS), K-Wert: 82,0 sowie

B) erfindungsgemäß
eine klare 32 gew.-%ige Lösung, die 91 Gew.-Teile dieses Copolymerisats und 9 Gew.-Teile eines Novolakphosphinats (NPI), erhalten aus p-Kresol-Formaldehyd-Novolak der Kernzahl 5 und 1-Chlor-1-oxo-3-methylphospholen-(2,3) (vgl. Beispiel 2), enthielt,
unter folgenden Bedingungen versponnen:

| | |
|---|---|
| Düse: | 180 Loch mit Durchmesser 0,25 mm |
| Spinnabzug: | 200 m/min |
| Lufttemperatur: | 240 °C |
| Luftmenge: | 35 $m^3$ /h |
| Spinneinzeltiter: | 9,5 dtex |

In beiden Fällen wusch man das DMF-haltige Spinngut mit Wasser von 60 bis 70 °C, verstreckte bei 95 °C in heißem Wasser 1:4,5, präparierte und trocknete unter Zulassung von 30 % Schrumpf bei 120 °C.

Danach wurden die erhaltenen Filamente 5 Minuten bei 115° C im Autoklaven gedämpft und dann zu 100 mm geschnitten.

Jede der beiden Fasertypen A, B wurde in 3 Teile A1 bis A3 und B1 bis B3 aufgeteilt.

Der 1. Teil wurde jeweils 2 Minuten mit Wasser gekocht und bei 50° C getrocknet.

Der 2. Teil wurde jeweils 1 Minute in einer 5 %igen Suspension von $Zn(OH)_2$ in Wasser und 1 Minute in einer 5 %igen $ZnCO_3$-Suspension (x 2 $Zn/OH)_2$- gekocht, anschließend gründlich mit Wasser gewaschen, um oberflächlich anhaftendes $Zn(OH)_2/ZnCO_3$ zu entfernen und danach bei 50° C getrocknet.

Der 3, Teil wurde jeweils 2 Minuten in einer frisch aus $AlCl_3$ und NaOH hergestellten 5 %igen Suspension des $Al(OH)_3$ gekocht, ebenfalls gewaschen und bei 50° C getrocknet.

An den Fasern wurden textiltechnologische Daten ermittelt, ferner durch potentiometrische Titration in DMSO der Anteil der noch verbliebenen freien Säure ermittelt, um eine Aussage über die Reaktion der Carboxylgruppen mit $Zn(OH)_2/ZnCO_3$ bzw. $Al(OH)_3$ zu erhalten. Die Bestimmung des erzielten Flammschutzes erfolgte nach der LOI-Methode (Ergebnisse siehe Tabelle 2).

Um eine Aussage über den Verbleib des Novolakphosphinat-Zusatzes (NPI) in der Faser zu erhalten, bestimmte man den P-Gehalt im getrockneten, vorher nicht mit Wasser gewaschenen Spinngut und der mit $Zn(OH)_2/ZnCO_3$ behandelten, danach getrockneten Faser. Sowohl im Spinngut als auch in der behandelten Faser betrug der P-Anteil 1 Gew.-% - vgl. Absatz IX.

**Tabelle 2**

| Vers. Nr. | Zusammensetzung der Faserbasis | Titer dtex | Festigkeit cN/dtex | Dehnung % | Kochschrumpf % | COOX | Äquivalenz-* prozent des reagierten COOH (% Salzbildung) | LOI-Wert (Faser-Vol% $O_2$) |
|---|---|---|---|---|---|---|---|---|
| Vergleich 1 | AN/5, 7MA/MAS (siehe Ia und II) | 3,6 | 3,2 | 22 | 0 | 0 | 0 | 17,5 |
| Vergleich 2, mit COOH-Gruppen, ohne und mit Teilneutralisierung, ohne Phosphinatzusatz | | | | | | | | |
| A-1 | AN/13AS/MAS | 3,5 | 2,3 | 46 | 2,8 | COOH | 0 | 21,2 |
| A-2 | AN/13AS/MAS | 3,0 | 2,4 | 46 | 0 | COOZn | 40 | 22,7 |
| A-3 | AN/13AS/MAS | 3,2 | 2,5 | 41 | 0 | COOAl | 55 | 23,4 |
| erfindungsgemäß mit COOH-Gruppen, mit Phosphinat-Zusatz, ohne und mit Teilneutralisierung | | | | | | | | |
| B-1 | 91(AN/13AS/MAS) 9(NPI) | 3,7 | 2,0 | 50 | 1,4 | COOH | 0 | 24,0 |
| B-2 | " | 3,0 | 2,2 | 47 | 0 | COOZn | 35 | 27,3 |
| B-3 | " | 3,1 | 2,4 | 43 | 0 | COOAl | 45 | 27,8 |

AN = Acrylnitril
MA = Methylacrylat
MAS = Methallylsulfonat
AS = Acrylsäure
NPI = Phosphinat nach Beispiel 2
* nach potentiometrischer Titration in DMSO bestimmt.

III. LOI von Mischungen eines Acrylnitril/10 Gew.-% Acrylsäure/0,5 Gew.-% Na-Methyallylsulfonat-Polymerisats mit $AlOH(OCOCH_3)_2$ und Novolakphosphinat sowie die Beeinflussung durch nachträgliche Salzbehandlung dieser Mischungen (Tabelle 3).

Dazu wurde das genannte Acrylnitrilcopolymerisat allein oder mit Novolakphosphinat f (Beispiel 2) in Dimethylformamid zunächst gelöst, dann ausgefällt oder fein gemahlenes $AlOH(OCOCH_3)_2$ zusätzlich in dieser Lösung suspendiert und das Gemisch in Wasser ausgefällt, mit Wasser gewaschen und getrocknet.

Zur Nachbehandlung mit Salzen gab man zu 500 g einer 20 gew.-%igen Lösung von Mg- bzw. Ca-$(OCOCH_3)_2$ 40 g des ausgefällten Acrylnitrilcopolymerisat-Novolakphosphinat-$AlOH(OCOCH_3)_2$-Gemisches, ließ 5 Minuten unter Rühren bei 100 °C reagieren, saugte ab, wusch gründlich mit Wasser nach und trocknete.

Von den derart erhaltenen Produktmischungen stellte man, wie beschrieben, Preßlinge her und bestimmte ihren Sauerstoffindex (Ergebnisse siehe Tabelle 3).

A: Acrylnitril/10 Gew.-% Acrylsäure/0,5 Gew.-% Na-Methallylsulfonatcopolymer; K-Wert: 83. (1390 mVal/kg Carboxylgruppen; 63 mVal/kg-Polymer an Sulfonsäure incl. Polymerendgruppen)

B: Novolakphosphinat (Beispiel 2)

C: $AlOH(OCOCH_3)_2$

IV. Einfluß eines Zusatzes von Acetylaceton auf Farbe und Viskosität der durch Salzzusatz modifizierten Spinnlösung

Es wurden 4 Spinnlösungen 1 bis 4 angesetzt und verglichen (vgl. Abb. 1):

Dazu löste man 50 g eines Acrylnitril/10 Gew.-% Acrylsäure/0,5 Gew.-% Na-Methallylsulfonat-Copolymeren vom K-Wert 83 und 1,8 g $Zn(OCOCH_3)_2 \times 2H_2O$ in 148,2 g Dimethylformamid unter Rühren während 1 Stunde bei 80 °C (Lösung 1).

Die 2. Lösung enthielt die gleichen Komponenten, nur das Lösungsmittel war ein Gemisch aus 146,6 g Dimethylformamid und 1,6 g Acetylaceton.

Die 3. Lösung bestand aus 50 g Copolymer und 3,6 g Zn Salz in 146,5 g DMF.

Die 4. Lösung bestand aus den Polymer- und Salzmengen der 3. Lösung, das Lösungsmittel waren 145 g DMF und 3,3 g Acetylaceton.

Die Acetylaceton versetzten Lösungen waren heller. Nach Überführen dieser Lösungen in ein Kugelfallglas wurde die Kugelfallviskosität über die Zeit bei 80 °C gemessen. Diese Methode beschreibt K. Jost, Reologica Acta (1958), Bd. 1, Nr. 2 bis 3, S. 303. In einem Rohr von 3,3 cm Durchmesser wird bei 80 °C die Zeit gemessen, die eine Stahlkugel von 130 mg bei einer Strecke von 7 cm in der Spinnlösung zum Fallen braucht.

Tabelle 3

LOI-Werte von Mischungen eines COOH-,haltigen PAN-Copolymerisats (vgl. III),

| Gew.-% A AN-Polymer | B NPI-Polymer (f) | C Al(OH)$Ac_2$ | Salzbehandlung mit $Ca^{2+}$ | $Mg^{2+}$ | LOI-Wert (Vol.% $O_2$) an Preßlingen |
|---|---|---|---|---|---|
| 100 | - | - | - | - | 22,8 (Vergleich) |
| 95 | 5 | - | - | - | 25,5 |
| 95 | - | 5 | - | - | 24,0 |
| 95 | 5 | - | + | | 24,3 |
| 95 | 5 | - | - | + | 25,9 |
| 90 | 5 | 5 | - | - | 27,7 |
| 90 | 5 | 5 | + | - | 28,4 |
| 90 | 5 | 5 | - | + | 30,5 |

A ist ein AN/10 Gew.-% AS/0,5 Gew.-% Na-MAS-Copolymer, K-Wert 83 mit 1390 mVal/Carboxylgruppen/kg und 63 mVal/Sulfonsäuregruppen/kg-Polymer, incl. Endgruppen

B Phosphinatzusatz (f)/vgl. Beispiel 2

C Al(OH)$(OCOCH_3)_2$ (essigsaure Tonerde)

Abbildung 1 zeigt, daß der Zusatz von Acetylaceton zu niedrigeren Viskositäten führt.

In der Abb. 1 bedeutet

1) eine Lösung, bei der 23 Äquivalent-%, bzw. auf Carboxylgruppen Zinkacetat eingesetzt wurde
2) wie 1, aber mit Salz/Acetylaceton-Verhältnis 1:2
3) eine Lösung, bei der 40 Äquivalent-% der Carboxylgruppen mit Zinkacetat zur Reaktion gebracht sind
4) wie 3 aber mit Salz/Acetylaceton-Verhältnis = 1:2.

V. Faserherstellung mit Nachbehandlung des Filaments durch $Zn(OCOCH_3)_2$

Ein Gemisch aus 27 kg des unter III beschriebenen Copolymerisats (AN/10 AS/0,5 MAS) und 3 kg des Novolakphosphinats f wurden in 63, 75 kg DMF 1,2 Stunden unter Rühren bei 80 °C gelöst, wie bereits angeführt, versponnen 1:4,0 verstreckt, getrocknet unter Schrumpfzulassung (20 %), im Autoklaven gedämpft und das Filament anschließend 1 Minute mit 100 °C heißer 5 %iger $Zn(OCOCH_3)_2$-Lösung in Wasser behandelt, abgespült, getrcoknet bei 50 °C und geschnitten (Fasern 1).

Abbildung 1 zeigt, daß der Zusatz von Acetylaceton zu niedrigeren Viskositäten führt.

In der Abb. 1 bedeutet

1) eine Lösung, bei der 23 Äquivalent-%, bzw. auf Carboxylgruppen Zinkacetat eingesetzt wurde
2) wie 1, aber mit Salz/Acetylaceton-Verhältnis 1:2
3) eine Lösung, bei der 40 Äquivalent-% der Carboxylgruppen mit Zinkacetat zur Reaktion gebracht sind
4) wie 3 aber mit Salz/Acetylaceton-Verhältnis = 1:2.

V. Faserherstellung mit Nachbehandlung des Filaments durch $Zn(OCOCH_3)_2$

Ein Gemisch aus 27 kg des unter III beschriebenen Copolymerisats (AN/10 AS/0,5 MAS) und 3 kg des Novolakphosphinats f wurden in 63, 75 kg DMF 1,2 Stunden unter Rühren bei 80°C gelöst, wie bereits angeführt, versponnen 1:4,0 verstreckt, getrocknet unter Schrumpfzulassung (20 %), im Autoklaven gedämpft und das Filament anschließend 1 Minute mit 100°C heißer 5 %iger $Zn(OCOCH_3)_2$-Lösung in Wasser behandelt, abgespült, getrocknet bei 50°C und geschnitten (Fasern 1).

Anschließend wurden 29,5 kg des Polymeren in 70,5 kg DMF gelöst und unter gleichen Bedingungen zu Fasern verarbeitet (Fasern 2).

Die Titration der noch vorhandenen freien Säure zeigte, daß bei beiden Fasern 19 % der Carboxylgruppen äquivalentmäßig in Zinksalz überführt worden waren.

Sonstige Eigenschaften

| Fasern | Titer dtex | Festigk. cn/dtex | Dehnung % | Kochschrumpf % | LOI Vol.% $O_2$ |
|---|---|---|---|---|---|
| 1 | 3,8 | 2,1 | 55 | 0 | 25,0 |
| 2 | 3,5 | 2,3 | 56 | 0 | 21,5 |

VI. Faserherstellung unter Zugabe von $Zn(OCOCH_3)_2$ zur Spinnlösung

6,75 kg des AN/10 AS/0,5 MAS-Polymeren, 0,75 kg des Novolakphosphinats f wurden zusammen mit 0,269 kg $Zn(OCOCH_3)_2$ x 2 $H_2O$ in 23,1 kg DMF 1 Stunde bei 80°C unter Rühren gelöst. (Berechnet auf die Säurefunktion des Copolymerisats wurden also ca. 25 % der Äquivalenz an Zn-Salz eingesetzt. Man würde einen Zn-Gehalt der Faser von theoretisch 1,06 % erwarten).

Nach dem Verspinnen aus einer 180-Lochdüse mit 0,25 mm Lochdurchmesser unter 200 m/min Abzug wusch man das Spinngut mit heißem Wasser, verstreckte 1:4,0 in heißem Wasser, präparierte, trocknete bei 130°C unter Schumpfzulassung von 20 % und dämpfte 5' bei 115°C ein Autoklaven. Für Untersuchungen schnitt man das Filament zu Fasern.

Eigenschaften:
Titer: 3,7 dtex
Festigkeit: 2,2 cN/dtex
Dehnung: 47 %
Kochschrumpf: 1 %
P-Gehalt: 1,1 %
Zn-Gehalt: 1,1 %
LOI: 25 Vol.% $O_2$

VII. Zusatz von und Nachbehandlung mit $Zn(OCOCH_3)_2$ bei der Faserherstellung

Die in VI angegebenen Komponenten wurden, wie dort beschrieben, gesponnen, gewaschen, 1:4,5 verstreckt. Das Streckband führte man dann durch eine 95°C warme, 15 %ige $Zn(OCOCH_3)_2$-Lösung in Wasser, wobei die Verweilzeit 1 Minute betrug, wusch mit Wasser, trocknete unter Zulassung von 30 % Schrumpf bei 130°C und dämpfte 7 Minuten bei 115°C im Autoklaven.

Die wäßrige $Zn(OCOCH_3)_2$-Behandlung führte zu einem weiteren 10 %igen Usmatz der Carboxylgruppen in das Zn-Salz, d.h. insgesamt 35 % der Carboxylgruppen lagen als Zn-Salz vor.

Der LOI-Wert der Faser betrug 26,3.

VIII Faserherstellung, charakterisiert durch Verwendung verschiedener Kationen

4,5 kg des unter IV beschriebenen Copolymerisats, 0,5 kg des Novolakphosphinats aus Beispiel 2, 0,18 kg $Zn(OCOCH_3)_2$ x $2H_2O$ wurden während 1 Stunde bei 80°C in einem Gemisch von 14,7 kg DMF und 0,16 kg Acetylaceton gelöst und analog den unter II A, B angegebenen Bedingungen trocken versponnen. Man wusch und verstreckte 1:4,0, behandelte das Streckgut während 2 Minuten in einer 95°C heißen, 15

%igen Lösung von $Mg(OCOCH_3)_2$. Nach erneutem Waschen mit Wasser wurde unter Schrumpfzulassung bei 120°C getrocknet, anschließend 5 Minuten bei 115°C im Autoklaven gedämpft und geschnitten.

Das Material wies einen LOI von 26,5 auf.

IX. Wasch- und Färbungsbeständigkeit

Dazu wurden 100 g einer durch Novolakphosphinat und $Zn^{2+}$ modifizierten Faser (nach Tabelle 2, Beispiel B2) auf der AN/Acrylsäure-Polymerbasis in einem Säckchen eingenäht und in 40 l einer wäßrigen Lösung, welche 0,5 g/l $Na_2CO_3$ und 1 ml/l Diadawin®EWN 200 % (Bayer AG, nichtionogen, Mischprodukte aus Polyglykolethern) enthielt, während 35 Minuten bei 40°C gewaschen und trocken geschleudert. Diesen Vorgang wiederholte man mit derselben Probe 5 mal. Nach dem Trocknen bestimmte man den $Zn^{2+}$- und P-Gehalt.

| | $Zn^{2+}$ | Gew.-% | P |
|---|---|---|---|
| Probe vorliegend | 2,3 | | 1,0 |
| Probe nach 5 Wäschen | 2,3 | | 1,0 |

Eine mit 1,2 % Astrazonblau ®FGRL in der Siedehitze gefärbten Probe zeigte danach ebenfalls nach den Zn und P-Gehalt wie im vorligenden Zustand.

**Patentansprüche**

1. Flammgeschützte Polyacrylnitril(co)polymerisat-Mischungen, enthaltend 3 bis 25 Gew.-% an Zusätzen von Phosphorestern B) auf Basis von Phosphinsäure-, Phosphonsäure- und Phosphorsäureestern von Polyphenolen, allein oder in Kombination miteinander, bzw. auch in Mischung mit bis zu 10 Gew.-% freien Polyphenolen, als Zusatz zu Acrylnitril(co)polymerisaten A).

2. Flammgeschützte phosphorhaltige Mischungen und daraus hergestellte Acrylnitril(co)-polymerisatformkörper, einschließlich Fasern, auf Acrylnitril(co)polymerisat-Basis, die
   A) 97 bis 75 Gew.-%, vorzugsweise 95 bis 85 Gew.-%, insbesondere 93 bis 88 Gew.-% eines Acrylnitril(co)polymerisats mit mindestens 60 Gew.-% Acrylnitril und
   B) 3 bis 25 Gew.-%, vorzugsweise 5 bis 15 Gew.-%, insbesondere 7 bis 12 Gew.-% Phosphorester B) aus der Reihe
   Phosphinsäureester von Polyphenolen, entsprechend der Formel (I)

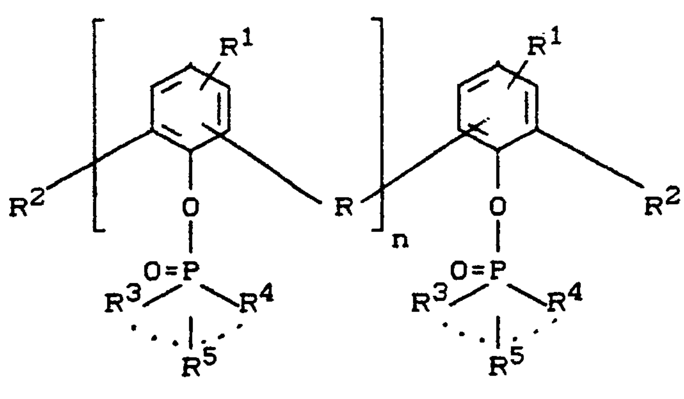

(I),

worin

| | |
|---|---|
| n | eine ganze Zahl von 1 bis 20, bevorzugt von 1 bis 10, insbesondere 2 bis 8, |
| R | eine geradkettige oder verzweigte Alkylengruppe mit 1 bis 4 Kohlenstoffatomen, vorzugsweise eine Methylengruppe, eine gegebenenfalls alkylsubstituierte Cycloalkylengruppe mit 5 bis 9 Kohlenstoffatomen, oder, wenn n = 1 ist, auch eine direkte Bindung, eine Sulfonyl- oder Carbonylgruppe bzw. Sauerstoff- oder Schwefelbrücke, |

$R^1$ und $R^2$ unabhängig voneinander Wasserstoff, Alkylgruppen mit 1 bis 12, vorzugsweise 1 bis 8 Kohlenstoffatomen, insbesondere Methyl, gegebenenfalls alkylsubstituierte Cycloalkylgruppen mit 5 bis 9 Kohlenstoffatomen, gegebenenfalls alkylsubstituierte Arylgruppen mit 6 bis 10 Kohlenstoffatomen,

$R^3$ und $R^4$ Alkylgruppen mit 1 bis 4 Kohlenstoffatomen und/oder Arylgruppen mit 6 bis 10 Kohlenstoffatomen sind, wobei $R^3$ und $R^4$ im Fall von Alkylgruppen auch durch eine Einfach- oder Doppelbindung zu einem Ring verbunden sein können und der so über das Phosphoratom gebildete Ring Alkylgruppen $R^5$ mit 1 bis 4 Kohlenstoffatomen tragen kann, bedeutet;

und/oder

eines Phosphonsäureesters VI von Polyphenolen der Phosphonsäuregruppen

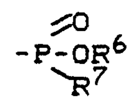

an einem phenolischen Rest und/oder cyclische Phosphonsäuregruppen

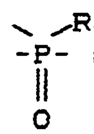 an

zwei benachbarte phenolische Reste gebunden enthält, charakterisiert durch die Formel (VI)

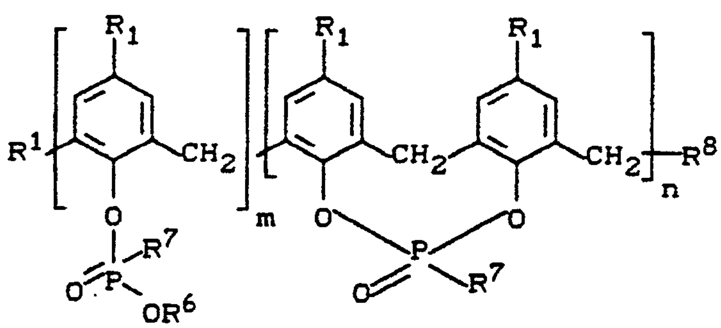 (VI),

worin

$R^1$
Wasserstoff oder Alkyl mit 1 bis 12 Kohlenstoffatomen, bevorzugt 1 bis 8 Kohlenstoffatomen, insbesondere Methyl,

$R^8$
den folgenden Formeln (VII) oder (VIII)

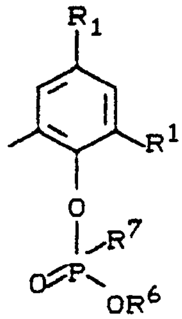 (VII) 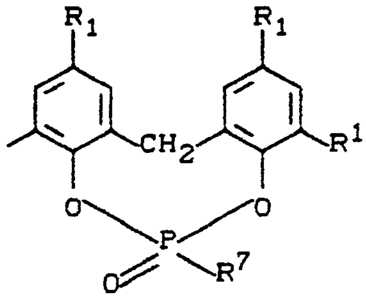 (VIII)

$R^6$
Phenyl, wobei dieses durch $C_1$-$C_4$-Alkyl, Aryl und Aralkyl, bevorzugt Methyl, Phenyl, Benzyl oder 2-Phenyl-ethyl, substituiert sein kann, und

$R^7$
Alkyl mit 1 bis 8 Kohlenstoffatomen oder bevorzugt als mit $C_1$-$C_4$-Alkyl substituiertem $C_6$-$C_{10}$-Aryl, bevorzugt Methyl bzw. Phenyl, ist,

entspricht und wenn m gleich Null ist, gleich n mindestens 1 sein muß und $R^8$ gleich dem Rest (VIII) sein muß

und wenn n gleich Null ist, m mindestens 2 und $R^8$ gleich dem Rest (VII) sein muß,

und/oder

eines Polyphosphorsäureesters von Polyphenolen, entsprechend der Formel (IX)

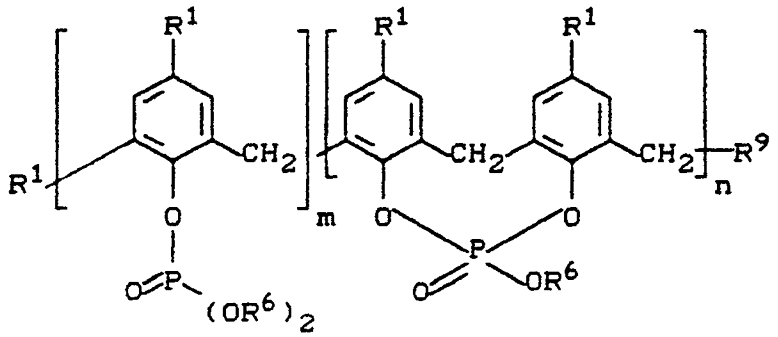 (IX)

worin

$R^9$
der Rest (X) oder (XI) der Formeln

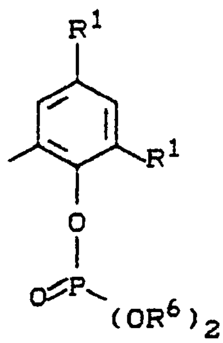 (X) 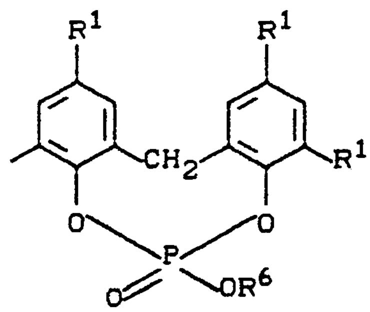 (XI)

ist, und

$R^1$ und $R^6$ die bereits angegebene Bedeutung haben,

wobei, wenn m gleich Null ist, n mindestens 1 und $R^9$ gleich (XI) sein muß, und wenn n gleich Null ist, m mindestens 2 und der Rest $R^9$ gleich dem Rest (X) sein muß,

und wobei in (VI) und (IX) m ganze Zahlen bis 12, n ganze Zahlen bis 5 sein können und die Kernzahl des Polyphenolanteils von 3 bis 9 (Zahl der Benzolringe) und nicht höher als 12 liegt,

sowie gegebenenfalls weitere, übliche Zusatzstoffe enthalten.

3. Flammgeschützte Mischungen nach Anspruch 2, dadurch gekennzeichnet, daß die Alkyl- und Arylphosphinsäureester (II) und (III) auf Basis von Bisphenolen oder von höhermolekularen Phenol-Formaldehyd-Kondensationsprodukten, insbesondere von Novolaken,

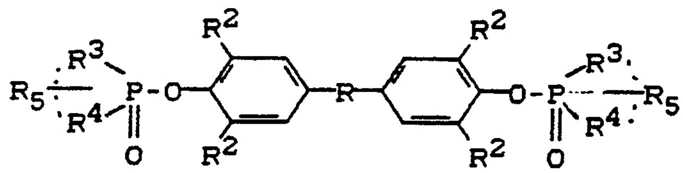
(II)

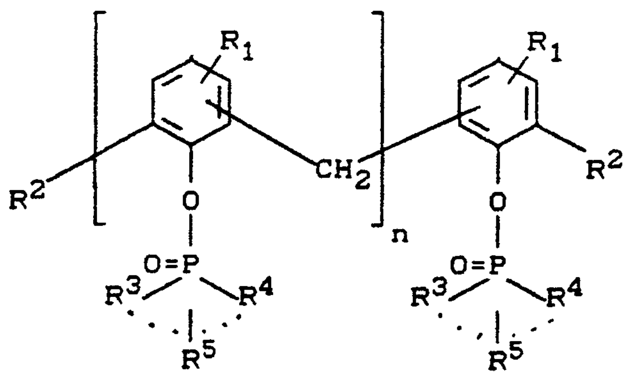
(III)

wobei

| | |
|---|---|
| n | eine ganze Zahl von 2 bis 15, bevorzugt von 2 bis 10, insbesondere 2 bis 8, |
| R | eine zweiwertige Gruppe wie eine Methylen- oder Isopropylidengruppe, eine Sulfonyl- oder Carbonylgruppe oder eine Sauerstoff- oder Schwefelbrücke, |
| $R^1$ | Wasserstoff oder eine Alkylgruppe mit 1 bis 12, vorzugsweise 1 bis 8 Kohlenstoffatomen, bevorzugt Methyl, |
| $R^2$ | Wasserstoff oder eine Alkylgruppe mit 1 bis 4 Kohlenstoffatomen, |
| $R^3$ und $R^4$ | unabhängig voneinander Methyl-, Ethyl- oder Phenylgruppen, oder die Reste $R^3$ und $R^4$ gemeinsam die gegebenenfalls mit $R^5$ substituierte Butyliden- bzw. Alkylbutylidengruppe bedeuten, |

enthalten.

4. Flammgeschützte Mischungen nach Ansprüchen 2 und 3, dadurch gekennzeichnet, daß als Phosphinsäureester (I) Verbindungen der Formel (IV) und (V)

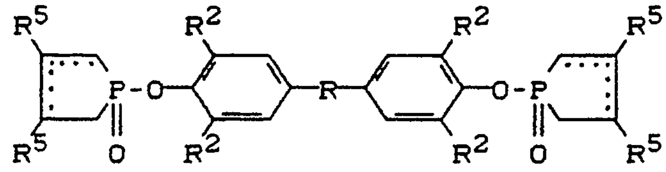

(IV)

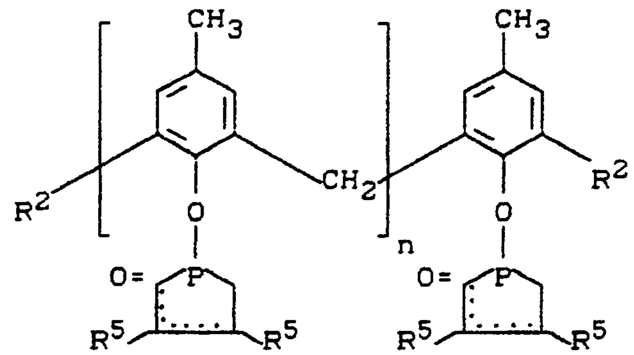

(V)

worin

n eine ganze Zahl von 2 bis 8 ist,
R die oben beschriebene Bedeutung hat,
$R^2$ und $R^5$ Wasserstoff oder Methylgruppen bedeuten,

enthalten.

5. Flammgeschützte Mischungen nach Ansprüchen 2 bis 4, dadurch gekennzeichnet, daß sie als Phosphinsäureester solche auf Basis von Dimethylphosphinsäure, Methylethylphosphinsäure, Diethylphosphinsäure, Methylphenylphosphinsäure, Ethylphenylphosphinsäure, Diphenylphosphinsäure, Di-p-Tolylphosphinsäure und Phenylnaphthylphosphinsäure sowie 1-Hydroxy-1-oxo-phospholen, 1-Hydroxy-1-oxo-3-methylphospholen und 1-Hydroxy-1-oxo-3,4-dimethylphospholen
und Polyphenolen, insbesondere Bisphenolen der Reihe
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfone,
sowie deren kernalkylierte Derivate oder Polyphenol-Novolake der Reihe
Phenol/Formaldehyd-Novolak,
o-Kresol/Formaldehyd-Novolak,
m-Kresol/Formaldehyd-Novolak,
p-Kresol/Formaldehyd-Novolak,
t-Butylphenol/Formaldehyd-Novolak,
p-Octylphenol/Formaldehyd-Novolak,
enthalten.

6. Flammgeschützte Mischungen nach Anspruch 2, dadurch gekennzeichnet, daß sie als Polyphenolphosphonate (VI) Dialkyl- und Diarylphosphonsäureester von Polyphenolen, insbesondere von Novolaken aus Phosphonsäuren der Reihe Methylphosphonsäure, Ethylphosphonsäure, Phenylphosphonsäure, p-Tolylphosphonsäure und Naphthylphosphonsäsure enthalten.

7. Flammgeschützte Mischungen nach Anspruch 2, dadurch gekennzeichnet, daß sie als Phosphonsäureester (VI) die Umsetzungsprodukte von 1 Mol Methylphosphonsäure-diphenylester bzw. Phenylphosphonsäure-diphenylester mit 1 bis 2 Äquivalenten Novolak enthalten.

8. Flammgeschützte Mischungen nach Ansprüchen 2 bis 7, dadurch gekennzeichnet, daß sie bis zu 10 Gew.-% an freien Polyphenolen bzw. Novolaken anstelle eines Teils der phosphorhaltigen Ester (I), (VI) und (IX), zusammen mit den phosphorhaltigen Estern, enthalten.

9. Flammgeschützte Mischung nach Anspruch 1 und 2, dadurch gekennzeichnet, daß die Acrylnitril(co)-polymerisate A) mindestens 75 Gew.-% und bevorzugt mindestens 82 Gew.-% Acrylnitril enthalten und bis 12 Gew.-% an neutralen Comonomeren, wie z.B. Styrol, Isobuten, Methacrylnitril, Methyl-, Ethyl-(meth)acrylat, Vinylacetat, Vinylbenzoat, (Meth)acrylamid, N-Methyl-, N-Ethyl-, N-Dimethyl(meth)-acrylamid, N-Hydroxymethyl-, N-Methoxymethyl(meth)acrylamid, N-Phenyl(meth)acrylamid, N-Vinylacetamid, N-Vinylformamid, N-Vinylpyrrolidon, N-Vinylcaprolactam, Vinyl-methyl-, Vinylethylether, Vinylimidazol, Vinyltriazol aufweisen sowie 0,1 bis 3 Gew.-% an sauren, funktionellen Monomeren zu Anfärbbarkeitsverbesserungen, wie z.B. (Meth)Allyl-, Vinyl-, Styrolsulfonat, (Meth)-Acrylamidomethylpropansulfonat, Vinylphosphonat, (Meth)acrylamidoalkylphosphonat in Mengen von 10 bis 460 mVal/kg einer Sulfon- oder Phosphonsäure im Polymer A) eingebaut oder auch 1 bis 10 Gew.-% an basischen Monomeren wie Dimethylaminoethyl(meth)acrylat, N-Dimethylaminopropyl(meth)-acrylamid enthalten und K-Werte von 30 bis 130 aufweisen.

10. Flammgeschützte Mischungen nach Anspruch 9, dadurch gekennzeichnet, daß sie Acrylnitril(co)-polymerisate A), die neben den neutralen Copolymeren aus Carboxylgruppen und davon abgeleiteten Salzen 1 bis 3-wertige Kationen enthaltenden Monomeren aufgebaut sind, enthalten und, bezogen auf Carboxylgruppen, 500 bis 2800, vorzugsweise 700-2100 mVal/kg Polymer A und/oder davon abgeleitete Salze besitzen.

11. Verwendung der Mischungen nach Ansprüchen 1 bis 10 in Form von Lösungen in hochpolaren Lösungsmitteln zur Verspinnung zu Fäden und Faser.

12. Verwendung nach Anspruch 11, dadurch gekennzeichnet, daß man bei der Verspinnung von Lösungen der Mischungen, welche Carbonsäure(salz)gruppen enthalten, Komplexbildner mitverwendet.

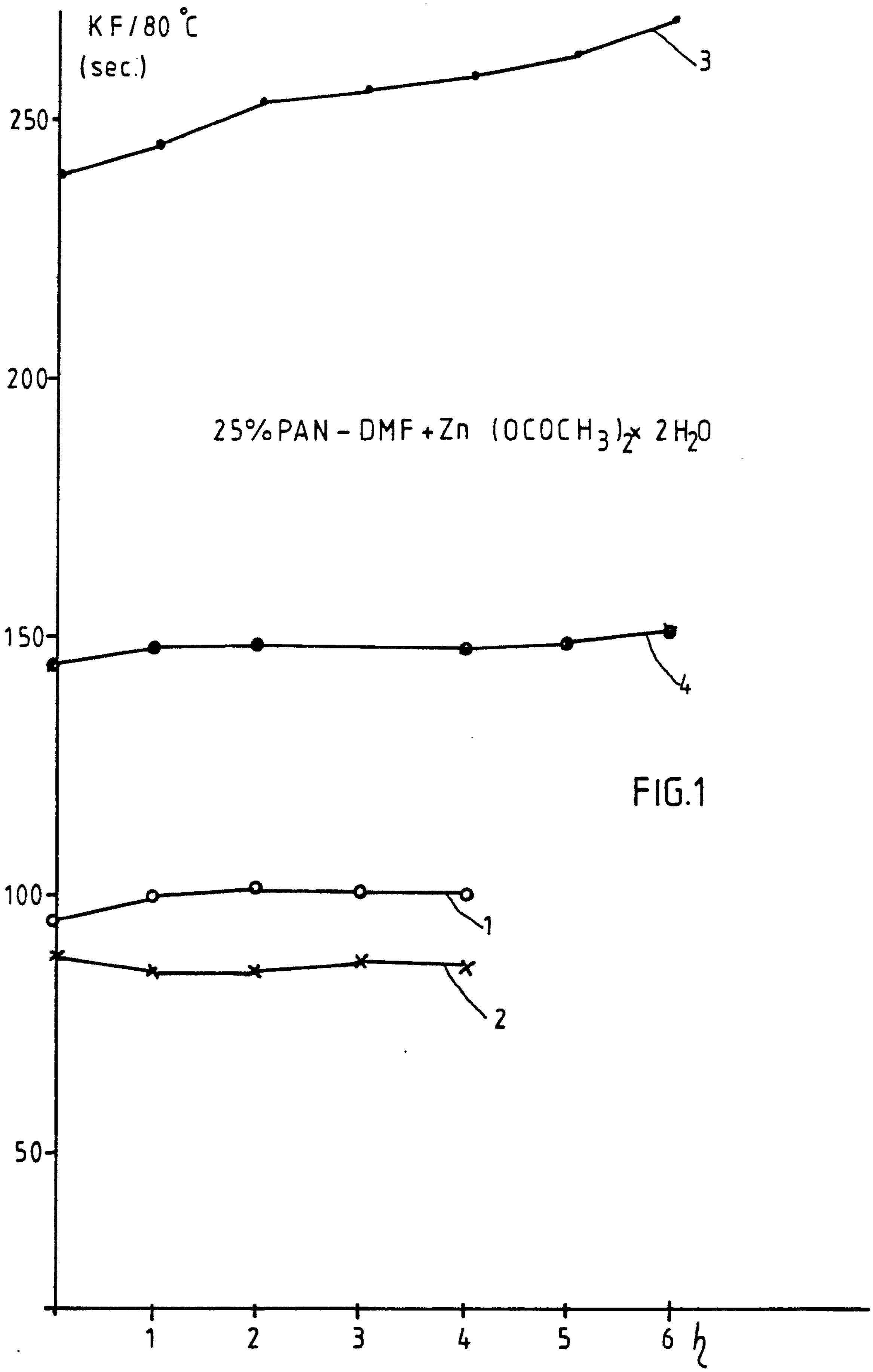
KF/80 °C
(sec.)
250
200
150
100
50
25% PAN - DMF + Zn (OCOCH3)2 x 2H2O
3
4
1
2
1
2
3
4
5
6
h

FIG.1

Europäisches Patentamt

# EUROPÄISCHER RECHERCHENBERICHT

Nummer der Anmeldung

**EP 90 12 4699**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 054 518 (CIBA-GEIGY AG)<br>* Seite 5, Abschnitt 8; Ansprüche 1,7,13 *<br>– – – | 1 | C 08 L 33/20<br>C 08 K 5/523<br>C 08 K 5/5313 |
| A | US-A-2 878 219 (L.T. JENKINS et al.)<br>* Beispiel 3; Ansprüche 1,4 *<br>– – – | 1 | C 08 K 5/5333<br>D 01 F 1/07 //<br>(C 08 L 33/20 |
| A | EP-A-0 237 135 (STAUFFER CHEMICAL CO.)<br>– – – | | C 08 L 61:32 ) |
| A | GB-A-1 528 371 (COURTAULDS LTD)<br>– – – – – | | |
| | | | **RECHERCHIERTE SACHGEBIETE (Int. Cl.5)** |
| | | | C 08 L<br>C 08 K<br>D 01 F |

Der vorliegende Recherchenbericht wurde für alle Patentansprüche erstellt

| Recherchenort | Abschlußdatum der Recherche | Prüfer |
|---|---|---|
| Den Haag | 15 Mai 91 | FUHR C.K.B. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument